(19) Europäisches Patentamt
European Patent Office
Office européen des brevets

(11) EP 0 844 939 B1

## (12) EUROPÄISCHE PATENTSCHRIFT

(45) Veröffentlichungstag und Bekanntmachung des Hinweises auf die Patenterteilung:
**30.12.1998 Patentblatt 1998/53**

(21) Anmeldenummer: 96925643.7

(22) Anmeldetag: **25.07.1996**

(51) Int. Cl.$^6$: **B60N 2/42**

(86) Internationale Anmeldenummer:
**PCT/DE96/01376**

(87) Internationale Veröffentlichungsnummer:
**WO 97/06974 (27.02.1997 Gazette 1997/10)**

(54) **SEITENAIRBAG-ERSATZSYSTEM EINES FAHRZEUGSITZES BEI PKW UND LKW**

LATERAL AIR BAG REPLACEMENT SYSTEM FOR A MOTOR VEHICLE SEAT

SYSTEME DE REMPLACEMENT D'AIRBAG LATERAL D'UN SIEGE DE VEHICULE AUTOMOBILE

(84) Benannte Vertragsstaaten:
**AT CH DE FR GB IT LI**

(30) Priorität: **17.08.1995 DE 19530219**

(43) Veröffentlichungstag der Anmeldung:
**03.06.1998 Patentblatt 1998/23**

(73) Patentinhaber:
**Go, Giok Djien, Dr.-Ing.
65510 Idstein (DE)**

(72) Erfinder:
**Go, Giok Djien, Dr.-Ing.
65510 Idstein (DE)**

(56) Entgegenhaltungen:
**EP-A- 0 401 092          DE-A- 4 305 295
DE-A- 4 337 019          US-A- 5 149 165**

**Beschreibung**

Unter dem Oberbegriff bezieht sich die Erfindung auf die Erhöhung des Insassenschutzes beim Seitenaufprall nach den erfindungsgemäßen Merkmalen des Anspruches 1.

Auf die Entgegenhaltungen US 5149165, US 5328234, DE 3023035 A1, DE 2950093 U1, DE 4209605 A1 und DE 4305295 A1 (US 5290084) lt. DPA Prüfbericht vom 28.06.96, PCT Recherchenbericht vom 18.12.96 und PCT Bescheid vom 19.06.97 wird Stellung genommen.

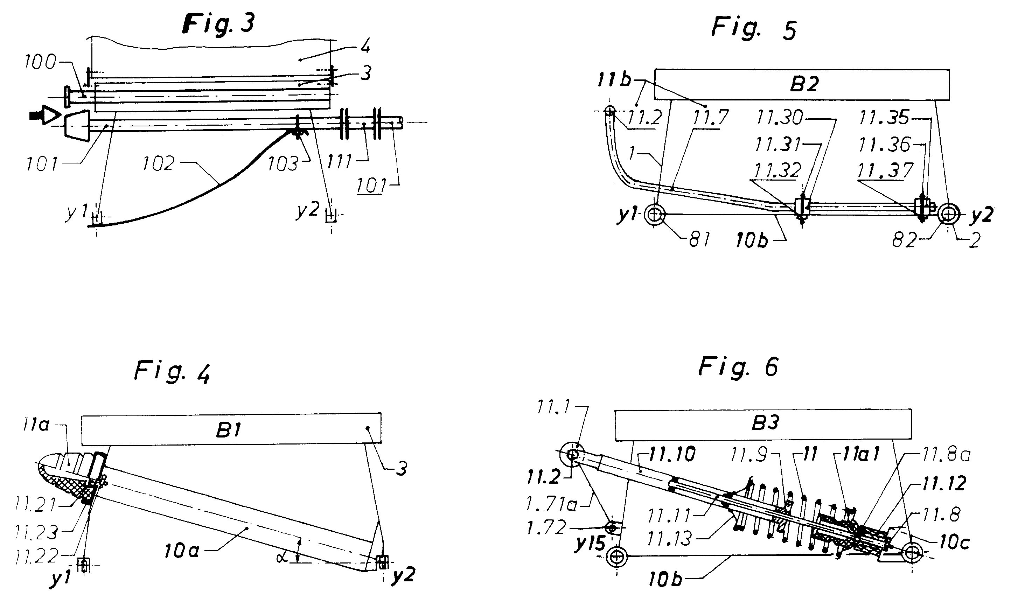

Aufgrund der fehlenden Deformationselemente bzw. energieabsorbierenden Teile in der Fahrzeugseite ist die Auslösezeit jedes Seitenairbags unglaublich kurz, nämlich < 10 ms (Millisekunden) nach EP 0565501 A1, neuerdings sogar < 5 ms nach der in AMS (Auto Motor und Sport) 12/96 in S.50 geschilderten neuen Anforderung. Nur kleine Volumina 12 Liter für Volvo-Seitenairbag und 15 Liter für Mercedes-Seitenairbag nach DE 4209944 A1 kommen deshalb in Frage. Damit ist die Schutzwirkung begrenzt. Durch den Seitenairbag zu weichem Abfangen des Kopfes verminderte der Seitenairbag die Brustbeschleunigung um 14% auf Kosten der Steigerung der Beckenbeschleunigung um 4% trotz des Abbaues der Seitenaufprallenergie durch fünf Verstärkungselemente **100, 101, 111, 100, 101** in **Fig.** 3 und der Einleitung der Seitenaufprallenergie in den Fahrzeugboden über das Verstärkungselement **111** des Tunnels. Aus einem 17% verschärften Seitencrashtest nach FMVSS 214 (AMS 5/95) und einem Frontcrashtest (ADAC 5/95) ergaben sich die Meßwerte derselben mit der Ausführungsform nach EP 0565501 ausgestatteten Volvo 850 in folgender **Tabelle** 1.

| Dummy als Fahrer | Meßwerte *mit* Seitenairbag | Meßwerte *ohne* Seitenairbag | FMVSS 214 | Meßwerte *mit* Frontairbag |
|---|---|---|---|---|
| Brustbeschleunigung (g) | 60,9 | 71,1 | 85 | 34,7 |
| Beckenbeschleunigung (g) | 77,2 | 74,4 | 130 | 33,4 |

Besorgniserregend ist trotz des Einsatzes von fünf Verstärkungselementen die Höhe der Meßwerte beim Seitenaufprall, welche um das **Zweifache** höher als beim Frontaufprall liegen. Selbst bei gleicher Größe ist die Beschleunigung in Querrichtung bei Front/Seitenkollisionen gefährlicher als die in Längsrichtung bei Front/Frontkollisionen, aufgrund der Hypothese, daß die HWS-Muskulatur samt Kopf das schwächste Glied bei Menschen ist.

Die Zeitungen berichteten über folgende Problemfälle:

- Fehlauslösungen der Frontairbags drei verschiedener Testfahrzeuge beim 40% Offset Test gegen eine verformbare Barriere (Stiftung Warentest 4/95 und Spiegel 13/95),
- Fehlauslösungen der Frontairbags der Fahrzeuge aus einer Klasse beim Überfahren von Bodenwellen (Wiesbadener Kurier vom 01.10.94),
- Fehlauslösung in Verbindung mit Verbrennungen ersten und zweiten Grades, die eine Fahrerin bei einer realen Frontkollision erleiden mußte (Wiesbadener Kurier vom 14.07.95),
- schwere Verletzungen wegen der Nichtauslösung der *Seitenairbags* beim Seitenaufprall eines Polizeiwagens gegen einen Laternenmast (AMS 12/96 in S.50),
- schwere Verletzung eines Rennfahrers wegen der Nichtauslösung des Frontairbags trotz großem Fertigungs und Kostenaufwand (AMS 14/96 in S.190-191) und
- kostspielige Rückrufaktionen zweier deutscher Automobilhersteller in Feb. und April 95 sowie Nov. 97 zur Überprüfung der Frontairbags und
- Fehlauslösungen der Frontairbags mit Todesfolgen (Spiegel 29/96 und Customer Reports 4/97).

Die *kursiv* verwendeten Bezugsnummern und Fig. beziehen sich auf die der aufgeführten Patentanmeldungen bzw. -schriften:

Wegen folgender Merkmale läßt sich der Insassenschutz gemäß DE-GM 2950093 U1 nicht sicherstellen:

- Während des Seitenaufpralles verschiebt sich der an einem *einzigen* Querrohr 3 befestigte Sitz in einer Richtung entgegen der *gezeichneten* Querrichtung.
- *Weder herstellbar* ist die Feder 2 wegen der Abmessung wie Außendurchmesser von ca. 70 mm sowie Länge von ca. 1500 mm *noch einsetzbar* wegen der Knickgefahr. Ferner können die Sitze bei Kurvenfahrt in unkontrollierte Schwingungen oder bei normaler Fahrt in Eigenschwingung der Federn geraten. Siehe unten aufgeführte Literatur über Federn.
- Entgegen der allgemeinen Forderung nach einer extrem steifen Fahrgastzelle wird die Steifigkeit des Fahrzeugbodens durch die Teilung und den klappbaren Tunnel geschwächt. Vgl. mit den Verstärkungselementen des Tunnels **6.1** in **Fig.** 1a sowie des Sitzes nach EP 0565501, DE 3607855 A1 und in **Fig.** 4, dessen Vorteile in Abs. "Ersatzsystem **B1**" näher erläutert werden.

Der Insassenschutz gemäß DE 3023035 A1 läßt sich nicht sicherstellen, weil nach der Erfassung durch den *unzuverlässigen* Sensor 32 beim Seitenaufprall der *druckmittelbeaufschlagte* Querverschiebeantrieb 33 aufgrund der geringen Geschwindigkeit des Druckmittels nicht imstande ist, den Sitz innerhalb der "Auslösezeit" von 15 ms, geschweige 5 ms, quer zu verschieben. Dies hat zur Folge, daß mangels Deformationselemente der auf dem quer verschobenen Sitz sitzende Insasse der Seitenaufprallenergie völlig ausgeliefert ist.

Ferner stellen die vier Paare Schrauben/Längslöcher des Sitzes Führungsprobleme bei der Querverschiebung dar.

Wegen folgender Merkmale läßt sich der Insassenschutz gemäß DE 4209605 A1 und US Pat. Nr. 5328234 nicht sicherstellen:

- Der Insasse der Aufprallenergie beim Seitenaufprall im Bereich zwischen der B-Säule und dem Drehpunkt völlig ausgeliefert ist.
- Wegen der Aktivierung des Gurtstrammers folgend der Drehrichtung und Längsrichtung (vgl. mit DE 4209605 A1 in S.(Seite )2/Z.(Zeile)49-52) wird der Oberkörper von dem Sicherheitsgurt festgehalten. Mittels der jeweiligen Drehvorrichtung ohne Deformationselemente übt die Stoßkraft in unverminderter Größe ein Drehmoment aus, welches den Unterkörper samt Wirbelsäule innerhalb eines Bruchteiles von ms verdreht, währenddessen der Kopf gegen den oberen Türrahmen und das Dach aufprallt.

Nach der Erfassung durch den *unzuverlässigen* Sensor 25, 26 der DE 4209605 A1 beim Seitenaufprall ist die *mechanische* Drehvorrichtung 17, 20 nicht imstande, den Sitz innerhalb der "Auslösezeit" von 15 ms, geschweige 5 ms, nach innen zu schwenken.

Beim Bremsen während einer normalen Fahrt und Heckaufprall gleiten die Haltestifte 32, 34 der Rückenlehne 20 der US Pat. Nr. 5328234 in den zugehörigen Längslöchern 36, 38 der Sitzplatte 26, wenn die Trägheitskraft des Insassen die schwenkbare Rückenlehne außermittig in Richtung der Fahrzeugmitte belastet. Die Gefahr eines Unfalles ist ziemlich groß.

Durch die Intrusion der Fahrzeugtür oder die infolge eines Crashsensors aktivierte Auslösevorrichtung gemäß DE 4305295 A1 oder US Pat. Nr. 5290084 werden sowohl ein Paar Seitenwangen des Sitzflächenteiles als auch ein Paar Seitenwangen der Rückenlehne (Anspr. 4) von der Ruhestellung in die Betriebsstellung gebracht. Leider ist der Insassenschutz wegen folgender praxisbezogener Problemfälle nicht sichergestellt:

A1. Da die Breite eines Fahrzeugsitzes und Fahrzeuges nicht beliebig ist, sitzt ein normaler, vor allem dicker Insasse unangenehm Darunter leidet die Konzentration beim Fahren.

A2. Tödliche Verletzung ist die Folge aus der Intrusion der Fahrertür eines Mercedes Benz und Beifahrertür eines Opel Corsa beim Seitenaufprall lt. Wiesbadener Tagblatt vom 3.12.94 und 7.10.96. Als "*Klemmvorrichtung*" komprimieren die unter großer Seitenaufprallenergie paarweise wirkenden Seitenwangen den Becken- und Brustbereich eines normalen, vor allem dicken Insassen, mit der Folge höherer Beschleunigungen, wie in Abs. A4 und A5.

A3. Durch die Verkürzung der Pendellänge L beim Einklemmen des Becken- und Brustbereiches mittels der Seitenwangen verstärken sich die Zurückbeschleunigung des Kopfes als des höchst gefährdeten Gliedes bei Menschen und das Aufprallen gegen die deformierte Fahrzeugtür.

Siehe Gegenmaßnahmen in Abs. I bis IV.

Durch die *vertikale* Stoßkraft mittels Federn 26 oder Airbag 33 gemäß US Pat. Nr. 5149165 beim Seitenaufprall wird der Fahrzeugsitz samt Insassen um eine Drehachse 28 geschwenkt. Im Gegensatz zu der Neuerfindung in Abs. I *erhöht* diese *vertikale* Stoßkraft die Beschleunigung. Der Insassenschutz und die Sitzkonstruktion sind wegen folgender Merkmale nicht sichergestellt:

A4. Lt. EP 0565501 A1 beträgt die Flammengeschwindigkeit des Seitenairbags v = 2000 m/s = 7200 km/h bei Soll-Auslösezeit von 10 ms. Unter Annahme des Weges w = 0.45 m zur vollen Entfaltung des Seitenairbags bei Ist-Auslösezeit t = 15 ms lt. AMS 5/95 errechnen sich die mittlere Stoßgeschwindigkeit $v_m$ = w/t = 30 m/s und die mittlere, vertikale Stoßbeschleunigung $b_m$ = 2000 m/s², das 15.5-fache des Grenzwertes für Beckenbeschleunigung nach FMVSS 214 in **Tabelle** 1, welches wegen des etwa 80-fachen Verhältnisses zwischen der Gesamtmasse aus dem Insassen und Fahrzeugsitz und der Masse des Seitenairbags trotz des geringeren Weges größer sein müßte.

A5. Mit Stabdurchmesser d = 11.20 mm, mittlerem Windungsdurchmesser $D_m$ = 131 mm, unbelasteter Höhe H = 481 mm und belasteter Höhe $H_o$ = 166 mm leistet die AUDI Vorderfeder [7 und 8] bei Belastung F = 3000 N und Federweg s = 300 mm eine Arbeit A = F*s/2 = 4500 Nm . Bei Gesamtgewicht des Insassen und Fahrzeugsitzes = 120 kg = 1200 N und $v_m$ = 30 m/s errechnet sich die Stoßenergie E = $m^*v_m^2/2$ = 5.4 $10^4$ Nm . In keiner Weise läßt sich die AUDI Vorderfeder mit Federunterlagen zwischen dem Sitzrahmen und Fahrzeugboden unterbringen. Wegen dieses engen Bauraumes sind die Federn *26* mit einer 125-fachen Arbeitsfläche der AUDI Vorderfeder nicht herstellbar.

A6. Welcher erhöhten Belastung ist der Insasse wegen der Ist-Auslösezeit unter 5 ms nach der eingangs erwähnten Anforderung ausgeliefert?

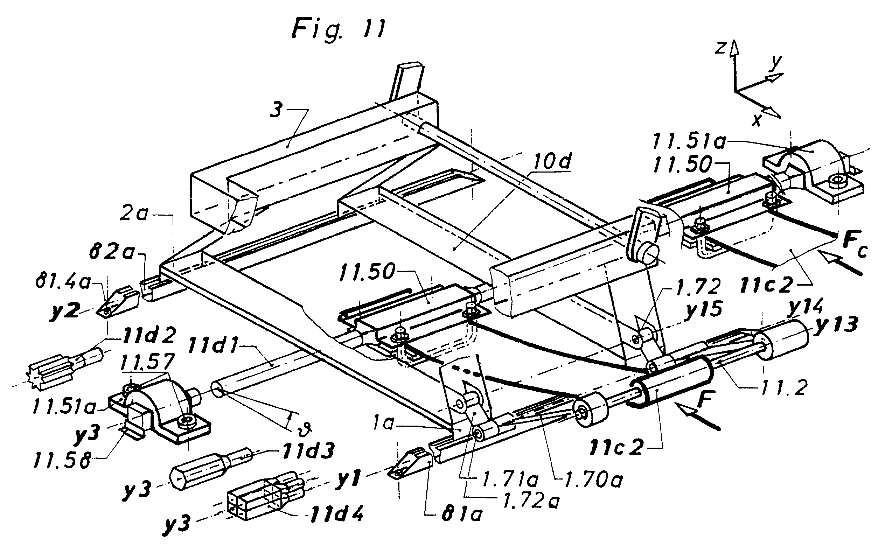

A7. Eine Sitzverstellung in Längsrichtung bringt die Schwenkvorrichtung außer Betrieb, weil sich die Stützpunkte der Federn oder des Airbags gegenüber dem Sitzrahmen und die Sperre *29* gegenüber der Auslösevorrichtung *31* verändern. Vgl. mit den Ausführungsformen in **Fig.** 11, 12, 14, 16, 17, 20 in Verbindung mit den zugehörigen Vorrichtungen zur Sitzverstellung in Abs. X.

A8. Wegen weit kürzerer Auslösezeit vermehren sich die Fehlauslösungen des Airbags *33* mit schwerer oder tödlicher Verletzung.

A9. Wie schwer wiegt der Fahrzeugsitz, dessen Sitzrahmen wegen der sehr großen Stoßkraft unbedingt steif und schwer ausgelegt werden muß?

Zwecks Erfassung des Seitenaufpralles z.B. in der B-Säule und beim ab Okt. 98 gültigen EU-Seitencrashtest ist eine große Anzahl von Sensoren für die Erfindungen gemäß DE 3023035 A1, DE 4209605 A1, US Pat. Nr. 5328234 und US Pat. Nr. 5149165 an der Türaußenhaut entlang der ganzen Türbreite und in der B-Säule anzubringen, wodurch die Kosten für Fertigung und Reparatur aufgrund der Vermehrung der Fehlauslösungen enorm zunehmen. Mit Zunahme der Unfälle muß man ebenso rechnen, da der Fahrer Kontrolle über sein Fahrzeug mit großer Wahrscheinlichkeit verliert, nachdem seine Sicht durch den fälschlicherweise ausgelösten Seitenairbag versperrt ist. Unter Zugrundelegung der Daten in Abs. A4 errechnet sich die akademische Flammengeschwindigkeit 21600 km/h bei 5 ms. An der äußerst knappen "Auslösezeit" von 5 ms scheitern **alle** bisherigen mit Sensoren bestückten, mechanischen Schutzvorrichtungen auch gemäß DE 4305295 A1 oder US Pat. Nr. 5290084 usw.

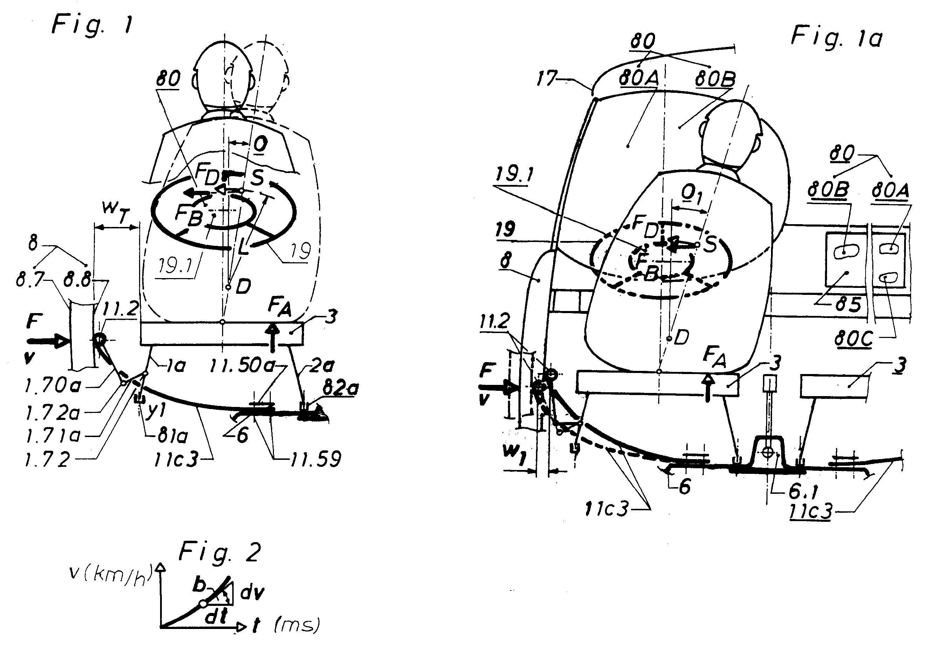

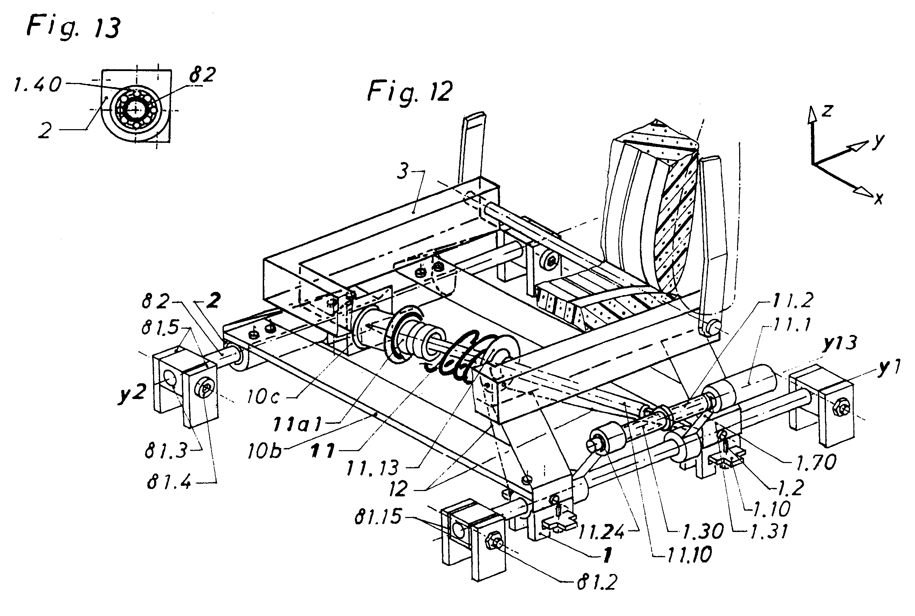

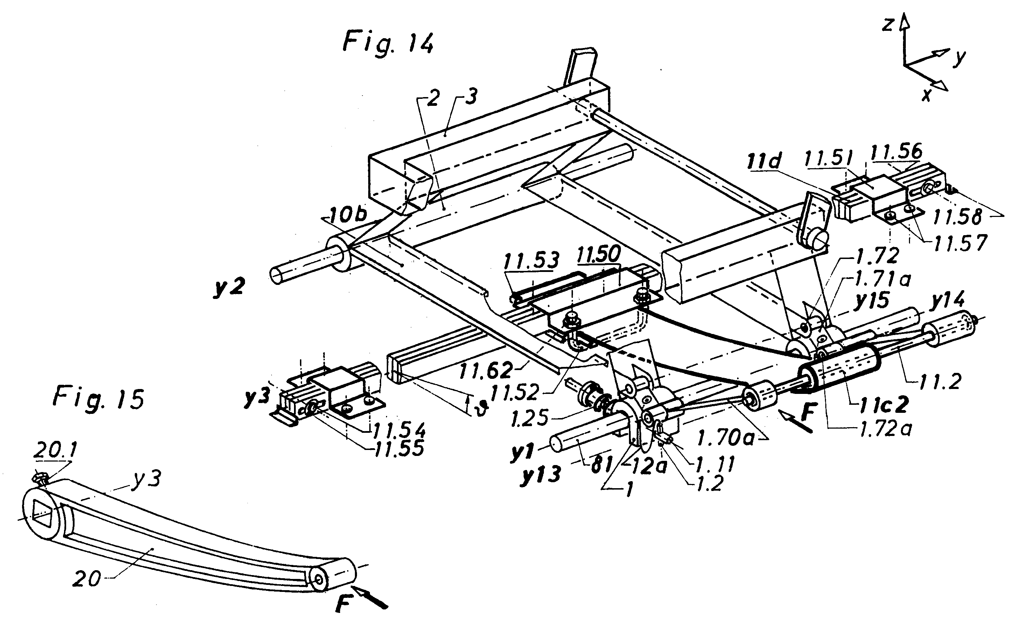

Als wesentlich preiswerter, zuverlässiger und verkehrssicherer durch den Verzicht auf Sensoren und Airbags entpuppt sich die mit einer Seitenaufprallwelle **11.2** und mindestens einem Sperrmechanismus versehene Schwenkvorrichtung **A1, A2** oder **A12** gemäß DE 19549379, die sich um eine oder beide Achsen der runden Schienenpaare **y1** und **y2** gemäß DE 19549378 schwenkt. Mit deren Hilfe wird infolge der Intrusion die von $F_4$ in **Gl. (1)** abhängige Arbeit $A_V$ zur Verlegung des auf dem Sitz sitzenden Insassen aus den Gefahrenzonen in die Fahrzeugmitte verrichtet, mit der Folge des Abbaues der Seitenaufprallenergie zur Verringerung der Beschleunigungen **b** und **Ö** in **Fig.** 1 und 2. Da sich diese Schwenkvorrichtungen *ausschließlich für runde Schienenpaare* eignen, ist u.a. Aufgabe der Erfindung, Ersatzsysteme mit den *herkömmlichen oder runden Schienenpaaren* zu konzipieren. Auf die Arbeitsweise der Schwenkvorrichtung **A2** mit dem Sperrmechanismus **S2** oder **S3** stützen sich die Ersatzsysteme **B3** in **Fig.** 6, 12 und **B5a** in **Fig.** 8, 14, allerdings mit dem Unterschied, daß **mehr** Seitenaufprallenergie durch die Verformungsarbeiten der Federelemente absorbiert wird.

Weitere Energieabsorption erfolgt über die Verformungsarbeit durch das zwischen der Türaußenhaut **8.7** und Türinnenhaut **8.8** angebrachte Federelement mit Federkennung $k_{F1}$ aus **Gl. (1)** gemäß DE 4342038 A1. In Gegensatz zum Seitenairbag und zu den Federn gemäß US Pat. Nr. 5149165 wirkt dieses Federelement als energieabsorbierendes Teil gegen die Seitenaufprallenergie in Hauptrichtung, die entgegen der x-Richtung ist. Während der Verformung wird die Auslösezeit verlängert, mit der Folge der Verringerung der Beschleunigungen.

| Begriff: | exakte Bezeichnung: |
| --- | --- |
| "Ersatzsystem" | Seitenairbag-Ersatzsystem oder Ersatzsystem für Seitenairbag |
| "Auslösezeit" | Auslösezeit eines Airbags = Erkennungszeit + Aufblasungszeit |
| "energieabsorbierendes Teil" | Federelement, Federkörperform, Stoßdämpfer (Reibungsdämpfer) oder Federungssystem |
| "Verformungsarbeit eines energieabsorbierenden Teiles" | Federungsarbeit oder Reibungsarbeit (Dämpfungsarbeit) |
| "Gefahrenzonen" | Diesen Gefahrenzonen wie der zum Bruch gekommenen Fensterscheibe und/oder der deformierten Fahrzeugseite bzw. -tür ist der Insasse ausgeliefert. |

(fortgesetzt)

| Begriff: | exakte Bezeichnung: |
|---|---|
| "Federelement" | Blatt-, Schraubendruckfeder oder Torsionsfeder (Stabilisator) |
| "Blattfeder" | ein- und Mehrblattfeder oder Blattfeder aus mehreren Lagen mit beliebiger Kennlinie [1 bis 3] |
| "Schraubendruckfeder" | zylindrische und nichtzylindrische Schraubendruckfeder mit beliebiger Kennlinie [7 bis 9] z.B. Tonnenfeder [9] |
| "Federkörperform" | Hohlkörperform, Hohlspitzenkörperform, Gummifeder [1] |

Bedeutende Bezugsquelle für die Erfindung. Aufstellung der **Gl. (1)** und Beschreibung der Seitenairbag-Ersatzsysteme:

[1] Fahrwerktechnik I und II (Reimpell, Vogel-Verlag, Würzburg)
[2] Warmgeformte Federn (Ulbricht usw., Hoesch Werke, Hohenlimburg)
[3] Stabilisatoren (Brüninghaus GmbH, Werdohl)
[4] Schwingungen (Magnus, Teubner Verlag, Stuttgart)
[5] Matrix Methods in Elastomechanics (Pestel, McGraw-Hill Book Company, New York)
[6] Der Einfluß von Nichtlinearitäten in Feder- und Dämpferkennlinie auf die Schwingungseigenschaften von Kraftfahrzeugen (Mühe, TH Braunschweig)
[7] Beitrag zur rechnerunterstützten Auslegung und Dimensionierung von Schraubendruckfedern mit beliebigen Kennlinien (Erfinder, Schriftenreihe 81.3, Ruhr-Universität Bochum)
[8] Problematik der Auslegung von Schraubendruckfedern unter Berücksichtigung des Abwälzverhaltens (Erfinder, Automobil-Industrie 3/82, S.359-367)
[9] Programmsystem AOSK zur Verformungs- und Spannungsanalyse einseitig abwälzender, strukturell unsymmetrischer Tonnenfeder (Erfinder, Konstruktion 35 (1983) H.8, S.307-312)

Zur Aufstellung des Gleichgewichtes aller Kräfte werden folgende Annahmen und Idealisierungen getroffen:

- die Stoßkraft **F** ersetze die verteilten Lasten der Seitenaufprallenergie.
- der Oberkörper sei ein Massenpunkt mit Pendellänge L um Drehachse D in **Fig.** 1 bei Vernachlässigung des Kopfes als zweiten Massenpunktes um Halsgelenk als Drehachse.
- der Insasse unterliege den von Winkelbeschleunigung $\underline{\ddot{O}}$ sowie Stoßbeschleunigung **b** abhängigen Kräften $F_D$ und $F_B$.

Unter Berücksichtigung der für Arbeit verantwortlichen Kräfte, des D'Alembertschen Prinzips, der äußeren Stoßkraft **F** und der zeitabhängigen Bewegungsgleichung sei die **Gleichung (1)** für das Gleichgewicht aller Kräfte formuliert:

$$\mathbf{F} = (k_S + k_{F1})^* x + k_{F2}^* x_F + k_D^* \vartheta + c^* v + (m + m_I)^* b + J_I^* \underline{\ddot{O}}/L + F_1 + F_2 + F_3 + F_4$$

$k_S$ = Steifigkeit der Fahrzeugseite, $k_{F1}$ = Federkonstante der 1. Knautschzone, $k_{F2}$ = Federkonstante der 2. Knautschzone, $k_D$ = spezifische Federkonstante der Torsionsfeder, c = Dämpfungs- oder Reibungsfaktor des Stoßdämpfers, m = Fahrzeugmasse, $m_I$ = Masse des Insassen, $J_I$ = bezüglich der Drehachse D in **Fig.** 1 geltendes Massenträgheitsmoment des Insassen, x = Intrusionsweg entgegen der x-Richtung in allen **Fig.**, $x_F$ = Federweg, **v** = Stoßgeschwindigkeit, $\vartheta$ = Drehwinkel in **Fig.** 11 und 14, b = Stoßbeschiennigung, L = Pendellänge als Abstand des Schwerpunktes des schwingenden Körpers S vom Drehpunkt D in **Fig.** 1, $\underline{O}$ = Drehwinkel um die Drehachse in **Fig.** 1, $\underline{\ddot{O}}$ = Winkelbeschleunigung als 2. Ableitung des Winkels $\underline{O}$, Drehträgheitskraft

$$F_D = J_I^* \underline{\ddot{O}}/L,$$

Massenträgheitskraft

$$\bar{F}_B = m_l * b, \; F_1 =$$

$F_1$ = für die Verformung des Sitzes verantwortliche Kraft, $F_2$ = für die Verformung der Verstärkungselemente des Sitzes verantwortliche Kraft, $F_3$ = Schwellwert für die Brucharbeit $A_B$ zum Bruch der Sollbruchstellen verantwortliche Kraft, $F_4$ = für die Arbeit $A_V$ zur Verlegung des auf dem Sitz sitzenden Insassen verantwortliche Kraft.

Aus dem Gleichgewicht in **Gl (1)** ist ersichtlich, daß die Verlängerung der Auslösezeit, die Verlegungsarbeit $A_V$, sowie Arbeit $A_B$ und die Verformungsarbeiten wie Federungsarbeit

$$A_F =$$

$$\int k_{F2} * x_F * \delta x_F,$$

Federungsarbeit

$$A_T = \int M_D * \delta \vartheta,$$

Reibungsarbeit

$$A_R = \int c * v * \delta x_F$$

für die Verringerung der Beschleunigungen verantwortlich sind.

Aus den Ausführungen gewinnt man die Erkenntnis, daß der Stand der Technik für Insassenschutz beim Seitenaufprall wegen folgender Problemfälle nicht geeignet ist:

B1. Vermehrung der Fehlauslösungen und Verletzungen als Folge der

* Reduzierung der Auslösezeit von 35 ms auf 15 ms für Frontairbag sowie von 15 ms auf 5 ms für Seitenairbag und
* Verwendung von auf Formveränderung (Verformungszustand) basierenden Sensoren, weniger zuverlässig als Sensoren der Frontairbags, welche sich auf Geschwindigkeits-, Beschleunigungsdifferenz, Aufprallwinkel und/oder Insassenvorverlagerung stützen.

B2. Unter Zugrundelegung der Daten in Abs. A4, des Seitenairbagsgewichtes zwischen 1 bis 2 kg und Anwendung der Energiegleichung errechnet sich die Aufprallgeschwindigkeit eines 900 kg schweren Fahrzeuges (z.B. VW Golf) zwischen 3.6 bis 5.1 km/h. Unter dem Begriff "oop" (out of position) ist die Position des Insassen zu dem aufgeblasenen Airbag nicht optimal. Wegen Fehlauslösung und/oder "oop" kann die Aufprallenergie in dieser großen Ordnung Kopf zertrümmen. Über das Enthaupten und tödliche Verletzungen, bedauerlicherweise, durch Fehlauslösungen der Frontairbags haben Zeitungen neulich berichtet.

Zu befürchten ist, daß tödliche Verletzung durch die Vermehrung der Fehlauslösungen und Verbreitung der Seitenairbags exponentiell zunimmt.

B3. Unzureichende Energieabsorption durch herkömmliche Vorrichtung und/oder Seitenairbag mit kleinem Volumen trotz hoher Herstellungskosten.

B4. Verletzung durch Intrusion der herkömmlichen Vorrichtung und Fahrzeugteile.

B5. Verletzung durch zusätzliche Beschleunigung wegen unmittelbarer Krafteinleitung am Sitzrahmen oder Fahrzeugsitz in Abs. A2 bis A5 und bei DE-GM 2950093 U1, DE 3023035 A1, DE 4209605 A1 usw.

B6. Aufprallen des Kopfes gegen die deformierten Fahrzeugteile.

Der Erfindung für Seitenairbag-Ersatzsystem zur Erhöhung des Insassenschutzes beim Seitenaufprall liegt mithin die Aufgabe zugrunde, den Insassenschutz sicherzustellen und zu optimieren. Die erfindungsgemäße Lösung dieser Aufgabe besteht in den Merkmalen des Patentanspruches 1. Die Unteransprüche beschreiben vorteilhafte Ausbildungen der Erfindung. Jene Lösung und Ausbildungen setzen sich aus folgenden Lösungsansätzen für Problemfälle B1 bis B6 zusammen:

- Einsatz von energieabsorbierenden Teilen der äußerst zuverlässigen Federungssysteme aus der Automobilindustrie,
- Anbringen dieser energieabsorbierenden Teile an dem Ersatzsystem in Wirkstellung, möglichst in x-Richtung nach allen Fig., gegen die Hauptrichtung des Seitenaufpralles,
- Verringerung der Beschleunigungen durch die Verlegungsarbeit, Brucharbeit $A_B$ und Vermehrung der Verformungsarbeiten,
- direkte Krafteinleitung in den Fahrzeugboden,
- Verlegung des auf dem Fahrzeugsitz sitzenden Insassen aus den Gefahrenzonen in die Fahrzeugmitte,
- Erhöhung der Zuverlässigkeit und Verlängerung der Auslösezeit bei Kostensenkung,
- Auslösen des Sicherheitsairbags **80, 80** in **Fig.** 1, 1a bei $w_1 > 0$ in **Fig.** 1a,
- Ersatzsystem für Insassenschutz unabhängig von der Längs-, Höhen- und Neigungsverstellung des Sitzes und
- Ersatzsystem des Sitzes mit den herkömmlichen oder runden Schienenpaaren.

Beim Seitenaufprall eines mit hoher Geschwindigkeit gefahrenen Fahrzeuges gegen einen steifen Pfeiler einer Autobahn wird *große Seitenaufprallenergie* durch das Ersatzsystem vor allem mit den *herkömmlichen* Schienenpaaren mit Wahrscheinlichkeit nicht ausreichend abgebaut. Siehe Merkmale des Ersatzsystems mit den *runden* Schienenpaaren in Ansprüchen 2 und 3. Durch das Abstützen des seitlich und drehend beschleunigten Insassen (Dummy in Crashtest) auf dem Sitzflächenteil entsteht eine Gegenkraft als "*Abstützkraft*" $F_A$ in **Fig.** 1 und 1a. Ist das Drehmoment infolge $F_A$ um D größer als das Drehmoment infolge des Körpergewichtes und der für die Drehung des Oberkörpers verantwortlichen Kraft um D, dann wird der Oberkörper durch die Drehträgheitskraft $F_D$ und Massenträgheitskraft $F_B$ zurückbeschleunigt. Durch das Aufschlagen gegen die deformierte Fahrzeugtür **8** und/oder das Dach **17** ist die Verletzungsgefahr groß.

Als Sicherheitsairbag kann ein full-size Seitenairbag zur Abhilfe kommen, leider mit zusätzlichen Kosten. Für weitere Verwertung des kurz vor Schrott stehenden Fahrzeuges zum Nutzen des Fahrers oder Beifahrers ist die erfindungsgemäße Auslösung des Frontairbags sicherlich sinnvoll, welcher als Sicherheitsairbag **80** oder **80** in **Fig.** 1a in der Lenkradnabe **19.1** oder im an dem Armaturenbrett befestigten Gehäuse **85** verstaut ist. Im Falle beidseitiger Seitenkollisionen lösen die beiden Sicherheitsairbags bei Belegung des Beifahrersitzes aus. Unter Beibehaltung der Schutzfunktion als Frontairbag und Anwendung des Merkmales in Abs. II wird der Sicherheitsairbag **80, 80** mit den erfindungsgemäßen Merkmalen in Abs. III bis VIII ausgestattet. Werden das Ersatzsystem und der Frontairbag als Sicherheitsairbag **vereint**, dann versprechen folgende vereinte Merkmale den höchsten und zuverlässigsten Insassenschutz sowie die niedrigsten Kosten unter allen Erfindungen.

Gegenüber dem Stand der Technik bietet das Ersatzsystem mit oder ohne Sicherheitsairbag folgende Vorteile:

I. Durch die Umwandlung der Seitenaufprallenergie in die Verformungsarbeiten der energieabsorbierenden Teile und die "nützliche" Verlegungsarbeit mittels der Schwenkvorrichtung bei konstruktiver Veränderung der Führungs- und Sitzschienen **81, 82, 1, 2** und direkter Krafteinleitung in den Fahrzeugboden werden

* die Beschleunigungen reduziert,
* der Fahrzeugsitz nicht zusätzlich beansprucht,
* der auf diesem Fahrzeugsitz sitzende Insasse aus den Gefahrenzonen in die Fahrzeugmitte verlegt und
* Zeit verbraucht. Somit verlängert sich die Auslösezeit.

II. Aus den Auslösezeiten von 22 ms für die beiden BMW Frontairbags mit 62 sowie 135 Liter (AMS 14/96) und 15 ms für den Volvo Seitenairbag mit 12 Liter ergibt sich die Zeitdifferenz von lediglich 7 ms. Die Verlängerung der Auslösezeit in Abs. I ermöglicht das Schieben des aufgeblasenen Frontairbags in den Raum zwischen der deformierten Fahrzeugtür und dem durch die um die y1- oder y2-Achse drehbare Schwenkvorrichtung geneigten Oberkörper zum weichen Abfangen (Einfedern) des Oberkörpers im Falle der Zurückbeschleunigung.

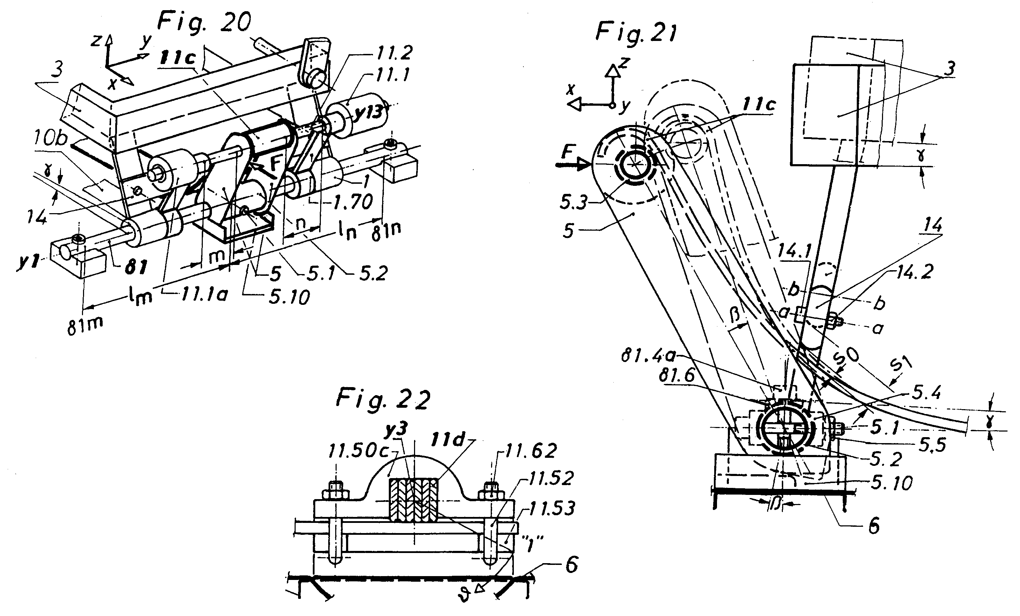

III.Zwar können Sensoren aus Stand der Technik zum Einsatz kommen. Zusätzliche Kosten und Unzuverlässigkeit wegen der bereits erwähnten Fehlauslösungen in der Praxis sprechen für die Teile des Ersatzsystems als *äußerst zuverlässige Sensoren* zur Erkennung des Seitenaufpralles, um den Zeitpunkt der Zündung des Sicherheitsairbags zu bestimmen. Unmittelbar identifizierbar ist die Größe der Seitenaufprallenergie durch die Seitenaufprallwelle **11.2, 11.2** der Schwenkvorrichtung mittels mindestens eines energieabsorbierenden Teiles wie Federelementes aufgrund der *direkten Veränderung des Verformungszustandes* wie Verschiebung $w_1$ in **Fig.** 1a, Drehwinkel $\vartheta$ in Fig. 11, 14 oder $\beta$ in **Fig.** 21 und/oder die Größe der Stoßgeschwindigkeit **v** (siehe **Gl.** (1)) mittels des Stoßdämpfers aufgrund der erzwungenen Schwingung. Dies ist eine Verbesserung gegenüber dem Sensor gemäß DE 4117811 C2 zur Bestimmung der Auslösezeit in Abhängigkeit von dem Aufprallwinkel und der partiellen Differenz zweier Geschwindigkeiten innerhalb eines Zeitabschnittes mittels Berechnung und Überprüfung der Kriterien, wodurch Zeit verloren geht. Somit wird die verbliebene Auslösezeit sehr knapp. Hinzu kommt Ungenauigkeit durch die Vernachlässigung der aufeinanderprallenden Massen auf die Größe der Aufprallenergie. Hieraus erklären sich die zunehmenden Fehlauslösungen mit den Folgen schwerer und tödlicher Verletzung beim bedeutenden Seitenaufprall oder einer Reparatur beim unbedeutenden gegen einen Pfosten.

IV. Dank Veränderung des Verformungszustandes als Kriterium für Sensoren sind Fehlauslösungen weitestgehend ausgeschlossen.

V. Ersetzbar ist eine Hülle durch mindestens zwei selbständige Hüllen mit selbständigen Gasgeneratoren (Druckgasquellen) **80A, 80B** oder <u>**80A**</u>, <u>**80B**</u> in **Fig.** 1a unter Beibehaltung der Schutzfunktion beim Frontaufprall.

VI. Zwecks blitzartigem Einschieben ist die Hülle **80A,** <u>**80A**</u> mit mindestens zwei Gasgeneratoren versehen, wobei einer beim Frontaufprall und alle beim Seitenaufprall aktiviert werden. Dies ist vergleichbar mit der Zündung eines einzigen Frontairbags gemäß DE 4032757 C2 durch zwei Gasgeneratoren zum Schutz des *nichtangegurteten* Insassen oder durch einen Gasgenerator zum Schutz des *angegurteten* Insassen.

VII. Zwecks weicherem Einfedern bei Zurückbeschleunigung läßt sich die Hülle **80A,** <u>**80A**</u> durch mindestens eine mit mindestens einem eigenen Gasgenerator versehene Zusatzhülle **80C,** <u>**80C**</u> vergrößern.

VIII. Vermeidbar ist der Richtungswechsel während der Aufblasung in die Wirkstellung durch Nichtaktivieren des für die Zündung verantwortlichen Gasgenerators der Hülle **80B,** <u>**80B**</u> beim Seitenaufprall.

IX. Bei Verzicht auf Seitenairbag und Verlängerung der Auslösezeit sind weder Verletzung durch Fehlauslösung noch Entsorgungs- noch Alterungsprobleme der Pellets zu erwarten. Falsche Auslösung des Seitenairbags durch falsche Erkennung des Sensors z.B. nach der Berührung mit einem Pfosten während des Parkens bedeutet eine fällige und teure Reparatur. Dagegen reagiert das Ersatzsystem auf die Verformung mit dem Ein- und Ausfedern.

X. Insassenschutz ist unabhängig von der Längs-, Höhen- und Neigungsverstellung des Sitzes mit Ersatzsystem mittels herkömmlicher oder neuer Vorrichtung gemäß DE 19549463 A1 und DE 19549464 A1.

XI. Kostensenkung durch hintereinandergeschaltete Ersatzsysteme für die vorderen sowie nachfolgenden Sitze.

XII. kein Millionen DM Kostenaufwand für die bei Frontairbags oder Seitenairbags erforderlichen Rückrufaktionen und kein Vertrauensverlust bei Kunden.

XIII. keine kostspielige sowie zeitaufwendige F&E und wesentlich geringere Herstellungskosten bei entscheidend höherer Zuverlässigkeit, da sich die zig-milliarden bereits hergestellten Federungssystemteile und Standardteile für die Ersatzsysteme seit mehreren Jahrzehnten in der Praxis bestens bewährt haben. Der Vergleich mit einem Seitenairbag wird diesen Vorteil verdeutlichen.

Seit mehreren Jahrzehnten werden Aufbaubeschleunigungen in verschiedener Größe beim Überfahren eines Fahrzeuges über Bodenwellen von allen Federungssystemen erfaßt und abgebaut. Im engen Bauraum bewährten sich in den siebziger Jahren die querliegenden Blattfedern bei der Vorderachse des Daf 44, Opel Kadett, GT sowie Olympia und der aus übereinanderliegenden, gebündelten Flachstählen bestehenden, querliegenden Torsionsfeder bei der Vorderachse des VW Käfer, 1600 sowie Transporter, wohlgemerkt ohne Rückrufaktionen und Versagen, als *Nachweis* für die im Vergleich zu Airbags wesentlich höhere Zuverlässigkeit.

Gegenüber dem Preis von 4339 DM für das Paar Mercedes Frontairbags und durchschnittlich 3500 DM für das Paar anderer Autohersteller ist der Preis von 748 DM für das Paar 15 Liter Seitenairbags des Mercedes E wahrhaftig ein "*Geschenk*". Lassen sich die Auslösezeit von 5 ms und die allgemeingültig niedrigen Meßwerte des Frontairbags für Seitenairbag realisieren, so liegen die Preise zweifellos **wesentlich höher**.

Für die Realisierung des teuersten Ersatzsystems **B3** in **Fig.** 6, 12 aus einem Stoßdämpfer (ca. 100 DM als Ersatzteilpreis für PKW der unteren Klasse), einer Schraubendruckfeder (60 DM als Ersatzteilpreis, 10-12 DM als Verkaufspreis ab Federnwerk) und Zubehörteilen (bis 100 DM) stehen die Gesamtkosten bis 260 DM bei entscheidend höherer Zuverlässigkeit und Schutzwirkung gegenüber dem Paar 15 Liter Seitenairbags. Wesentlich geringer liegen die Herstellungskosten für die Ersatzsysteme **B5** aus der mittels einfacher Werkzeuge warmgeformten Blattfeder (3-4 DM) und/oder der aus den fertigen Flachstählen nebeneinandergelegten Torsionsfeder (1-2 DM) in **Fig.** 8, 11, 14, 20-22.

Da die für Federungssysteme vorgesehene Lebensdauer von 1-2 Mill. Lastwechsel nicht erforderlich ist, reduzieren sich die Herstellungskosten enorm für Federelemente, Stoß- und Reibungsdämpfer bei Verzicht auf hochlegierte Stähle, Materialprüfungen, die engen Fertigungstoleranzen zur Einhaltung der Federkennlinie und bei Verwendung von einfachen Flachstählen als Reibungsdämpfer, von Motorrad-Stoßdämpfern usw.

Zum Dämpfen der Schwingungen und zur Einschränkung der Pendelbewegungen sowie Reaktionskräfte durch Verrichtung einer Reibungsarbeit eignen sich Stoß- oder Reibungsdämpfer. Bei Stoßdämpfern mit, z.B. geschwindigkeitsabhängig progressiver Kennung klingen die Schwingungen mit zunehmender Stoßgeschwindigkeit um so stärker ab [4, 6]. Die Differenz zwischen den beiden Federungsarbeiten $A_T$ beim Ein- und Ausfedern ergibt die Reibungsarbeit $A_R$ der aus Flachstählen zusammengebauten Torsionsfeder infolge des Reibens der Flachstähle aneinander. Durch Versuche wird diese Reibungsarbeit $A_R$ ermittelt.

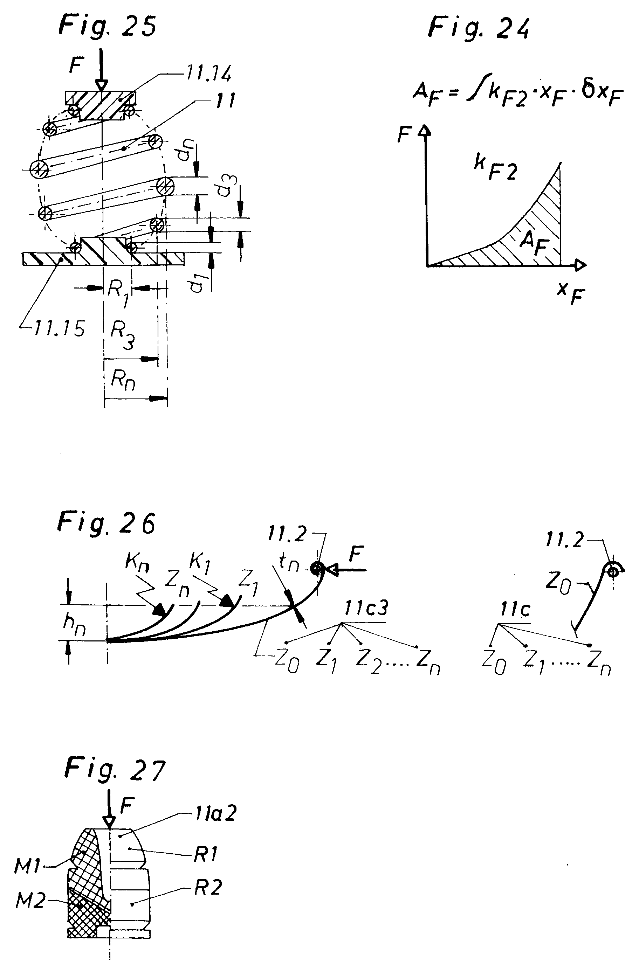

Vergleichbar mit Federung eines Fahrzeuges, eignen sich Federelemente in **Fig.** 5-10, 11, 12, 14, 16, 17, 22, 23, 25, 26 und/oder Federkörperformen des Sitzes in **Fig.** 4, 6, 12, 27 aufgrund ihrer Eigenschaft, sich unter Belastung zu verformen, für die Aufgaben zum Abfangen von Stößen und zur Umwandlung der Energie in die Federungsarbeit eines Federelementes $A_F$ und/oder Federungsarbeit einer Torsionsfeder $A_T$, wobei diese Arbeit oder Energie in den Fahrzeugboden indirekt oder direkt eingeleitet wird. Im Gegensatz zu den Federelementen und Federkörperformen mit linearer Federkennlinie sind Federelemente und Federkörperformen mit progressiver Federkennlinie (Kennung) durch die Aufnahme *größerer* Federungsarbeit $A_F$ oder $A_T$ in **Fig.** 24 bei *kleinerem* Bauraum gekennzeichnet. Realisierbar ist bei Zunahme der Belastung bzw. Stoßkraft **F** die progressive Federkennlinie durch

- die geometrische Nichtlinearität infolge der großen Verformung [7].
- das zunehmende Abwälzen einseitiger oder beidseitiger Tonnenfeder in **Fig.** 25 als nichtzylindrischer Schraubendruckfeder **11** auf einer Federunterlage **11.15** oder aufbeiden Federunterlagen. In Abhängigkeit des Abwälzverhaltens und der großen Verformung läßt sich die Veränderung der Stabdurchmesser $d_1$, $d_3$,...$d_n$ in Zuordnung zu ihren Halbkreisdurchmessern $R_1$, $R_3$,...$R_n$ zwecks Spannungsoptimierung mittels FEM [7 bis 9] vorausberechnen.
- das zunehmende Abwälzen der Windungen einer zylindrischen Schraubendruckfeder aufeinander.
- das zunehmende Zusammendrücken der Federkörperform wie

    - Hohlkörperform aus zwei Kammern **11a1** in **Fig.** 6 oder mehreren Kammern **11a** in **Fig.** 4 oder
    - Hohlspitzenkörperform **11a2** aus zwei Materialien in **Fig.** 27 oder mehreren Materialien, die durch unterschiedliches Elastizitäts- und Gleitmodul gekennzeichnet sind, wobei sich der 1. Körper aus zwei Kammern zusammensetzt.

Als Federkörperformen kommen Materialien aus Gummi, gummi-ähnlichem Kunststoff wie Zell-Polyurethan in Frage.

- das zunehmende Abwälzen einer oder mehrerer Zusatzblattfedern $Z_1$, $Z_2$,...$Z_n$ in Zuordnung zu ihren Krümmungen $K_1$, $K_2$,...$K_n$ auf der Hauptfeder $Z_0$ der Blattfeder **11c3** oder **11c** in **Fig.** 26. In Abhängigkeit des Abwälzverhaltens und der großen Verformung lassen sich die auszuwalzenden Blattdicken $t_1$, $t_3$,...$t_n$ in Zuordnung zu ihren Hebelarmen $h_1$, $h_3$,...$h_n$ zwecks Spannungsoptimierung mittels FEM vorausberechnen. Aufgrund der hohen Energieabsorption bei geringerer Masse können mit Kohlenstoff-, Glas- oder Kevlarfasern verstärkte Kunststoffe, wie sie z.B. für Skier verwendet werden, zum Einsatz kommen.

In drei Phasen der Arbeitsfläche in Abhängigkeit von der zunehmenden Stoßkraft **F** läßt sich die Knautschzone beim Seitenaufprall abbilden:

1. Durch die weiche Federkennlinnie bei geringer Energieabsorption werden die für Insassen gefährlichen Spitzenbeschleunigungen innerhalb einem kurzen Zeitabschnitt in ms enorm verringert.
2. Durch die infolge der progressiven Kennung großwerdende Arbeitsfläche wird mehr Seitenaufprallenergie absorbiert.
3. Nach Bruch mindestens einer Sollbruchstelle des Federelementes infolge der Überschreitung der Festigkeit bzw. Fließgrenze wird die gespeicherte Energie freigegeben. Durch die Schwächung des Querschnittes und/oder die starken Krümmungen des Knotenpunktes kann die Sollbruchstelle ausgebildet sein.

Folgende Zeichnungen zeigen Ausführungsformen der Erfindung unter Berücksichtigung des xyz Koordinatensystems:

**Fig.** 1 eine Hinteransicht eines auf einem Sitz mit herkömmlichen Schienenpaaren **81a**, **82a**, **1a**, **2a** sitzenden Insassen, der den Massen- $F_B$ sowie Drehträgheitskraft $F_D$ ausgeliefert ist, als Folge der Stoßkraft **F** mit Stoßgeschwindigkeit v an der aus der Türaußenhaut **8.7** und Türinnenhaut **8.8** bestehenden Tür **8**. Der Sicherheitsairbag **80** ist in der Lenkradnabe **19.1** verstaut.

**Fig.** 1a eine Ansicht der verformten Blattfeder **11c3** bei Verschiebung $w_1$, des aufgeblasenen Sicherheitsairbags **80** zum Abfangen des Oberkörpers und des im Gehäuse **85** verstauten Sicherheitsairbags **80** zum Schutz des Beifahrers.

**Fig.** 2 eine Funktion der zeitabhängigen Stoßgeschwindigkeit **v** und -beschleunigung **b**.

**Fig.** 3 eine Ansicht eines herkömmlichen Sitzes mit Verstärkungselementen **100, 101** versehen mit Verstärkungselement **111** des Tunnels zur indirekten Kraftumleitung gemäß EP 0565501 A1.

**Fig.** 4 bis 7 jeweils eine Ansicht eines Sitzes mit dem zugehörigen Ersatzsystem **B1-B4**.

**Fig.** 8 eine Ansicht eines Sitzes mit einem allgemeingültigen Ersatzsystem **B5** für **B5a-B5d**.

**Fig.** 9 eine Ansicht eines Sitzes mit einem allgemeingültigen Ersatzsystem **B6** für **B6a-B6b**.

**Fig.** 10 eine Ansicht eines Hintersitzes bestehend aus **C1, C2** und Ersatzsystem **B7.** dessen Blattfeder **11** für **11a-11c** allgemeingültig ist.

**Fig.** 11 eine perspektivische Ansicht eines Sitzes bestehend aus zwei herkömmlichen Schienenpaaren **81a, 82a, 1a, 2a** und Ersatzsystem **B5b.**

**Fig.** 12 eine perspektivische Ansicht eines Sitzes bestehend aus zwei runden Schienenpaaren **81, 82, 1, 2** und Ersatzsystem **B3.**

**Fig.** 13 eine Ansicht einer entlang der Führungsschiene **82** mittels mindestens eines Kugellagers **1.40** gleitend verschiebbaren Sitzschiene **2.**

**Fig.** 14 eine perspektivische Ansicht eines Sitzes bestehend aus zwei runden Schienenpaaren und Ersatzsystem **B5a** oder **B5c.**

**Fig.** 15 eine perspektivische Ansicht eines Lenkers **20** einer Torsionsfeder.

**Fig.** 16 eine perspektivische Ansicht eines Sitzes bestehend aus zwei runden Schienenpaaren und Ersatzsystem **B4**.

**Fig.** 17 eine perspektivische Ansicht eines Sitzes bestehend aus zwei runden Schienenpaaren und Ersatzsystem **B6a**.

**Fig.** 18 eine perspektivische Ansicht eines über der Blattfeder liegenden Haltestückes **11.50b**, in deren Löcher die Schrauben **11.59** zur Verschraubung mit dem Fahrzeugboden gesteckt sind.

**Fig.** 19 eine perspektivische Ansicht der beiden über die Blattfeder liegenden Haltestücke **11.50a**, durch deren Löcher die Schrauben **11.59** zur Verschraubung mit dem Fahrzeugboden gesteckt sind,

**Fig.** 20 eine perspektivische Ansicht eines Sitzes bestehend aus zwei runden Schienenpaaren und Ersatzsystem **B5d**, dessen offenes Auge der Blattfeder **11c** an das Rohr des Lenkers **5** zwecks freier Verformung frei anlegt.

**Fig.** 21 eine Hinteransicht des Sitzes zur Darstellung der kinematischen Bewegung des Lenkers **5**, worin die Seitenaufprallwelle **11.2** geschoben ist.

**Fig.** 22 einen Schnitt einer mit der Blattfeder **11c** verschraubten Torsionsfeder **11d**.

**Fig.** 23 eine Ansicht eines Hintersitzes **C** bestehend aus **C1, C2** und Ersatzsystem **B7**.

**Fig.** 24 eine progressive Arbeitsfläche $A_F$ eines Federelementes oder einer Federkörperform.

**Fig.** 25 einen Schnitt einer nichtzylindrischen Schraubendruckfeder (Tonnenfeder) mit progressiver Federkennlinie.

**Fig.** 26 eine Ansicht einer Blattfeder **11c3, 11c** bestehend aus einer Hauptfeder $Z_0$ und mehreren Zusatzblattfedern $Z_1$, $Z_2$,...$Z_n$ in Zuordnung zu ihren Krümmungen $K_1$, $K_2$,...$k_n$.

**Fig.** 27 einen Schnitt einer aus zwei Materialien gebildeten Federkörperform wie Hohlspitzenkörperform **11a2**.

Bei unveränderter Positionierung zum Insassen unabhängig von der Sitzverstellung des Sitzes hat die erfindungsgemäße Seitenaufprallwelle **11.2** gemeinsam mit den zugehörigen Lenkern **1.70, 1.70a, 1.71, 1.71a** folgende Aufgaben:

1. zur Verlegung des Insassen aus den Gefahrenzonen,
2. zur Erhöhung der Überlebenschance durch die direkte *oder* indirekte Krafteinleitung in den Fahrzeugboden, wodurch der Sitz überhaupt nicht *oder* wenig beansprucht wird,
3. zur Erkennung des Seitenaufpralles gegen die Tür und/oder die Säule vor dem Sitz bei Überschreitung eines Schwellwertes des Sperrmechanismus,
4. zum Schwenken im Verbund mit der Schwenkvorrichtung und
5. als Schutzvorrichtung für den Insassen vor der Intrusion.

Bei Extrempositionierung des Sitzes nach vorn (entgegen der y-Richtung) erstreckt sich die Länge der Seitenaufprallwelle mit den Lenkern über den Sitz hinaus möglichst bis zur nächstliegenden Säule (B-Säule für Vordersitz und C-Säule für Hintersitz), um die Verformung dieser Säule erfassen zu können. Allerdings darf die Länge zumindest bei der normalen Position das Ein- und Aussteigen der Fondpassagiere in keiner Weise behindern. Zwecks Verlängerung ist sie versehen, mit

- einem Stoßaufnehmer **11.1** in **Fig.** 12,
- zwei Stoßaufnehmern **11.1, 11.1a** in **Fig.** 20 oder
- einem verlängerten Auge des hinteren Lenkers **1.70a** in **Fig.** 11, 14, 16 und 17.

Dabei kann das Auge den Umfang eines Stoßaufnehmers annehmen. Zum Schutz gegen Verletzung durch unbeabsichtigtes Stoßen gegen die Augen, vor allem mit großem Durchmesser beim Ein- und Aussteigen empfiehlt sich das Überziehen des Auges mit weichem Material wie Gummi oder Kunststoff.

Die Enden der Seitenaufprallwelle in allen **Fig.** werden mit den drehbaren Lenkern mittels Sicherungsteile wie z.B.

Splinten, Schrauben, Muttern oder Sicherungsringen **11.24** nach DIN 471 **Fig.** 12 gesichert, genauso durch Verschrauben, Verschweißen, Vernieten oder Verkleben. Zweifellos kann das sich über den Sitz erstreckende Rückenteil **11.2** jedes Stabilisators wie **11b** in **Fig.** 5 als starre Seitenaufprallwelle bei Verzicht auf Lenker dienen.

Wie *Gelenk* verhält sich die mit *einem oder mehreren Paar* Lenkern, mit Lagerbolzen versehene Seitenaufprallwelle **11.2**, welche schwenkbar gelagert ist

- in den von der runden Führungsschiene **81** in **Fig.** 12, 20 in y1-Richtung geführten sowie um die y1-Achse drehbaren Lenkern **1.70**, welche durch die Berührung mit einem der Sitzfüße des Sitzrahmens **3** bei der Sitzverstellung bewegt werden; *oder*
- in den von den Halteplatten der Sitzfüße des Sitzrahmens **3** seitlich geführten sowie an den Lagerbolzen **1.72** um die y15-Achse schwenkbar gelagerten Lenkern **1.71a** in **Fig.** 6 *oder*
- in den Lenkern **1.70a**, die mit den Lenkern **1.71a** an den gemeinsamen Lagerbolzen **1.72a** um die y14-Achse schwenkbar gelagert sind. Hierbei sind die Lenker **1.71a** an den Lagerbolzen **1.72** um die y15-Achse schwenkbar gelagert und seitlich geführt:

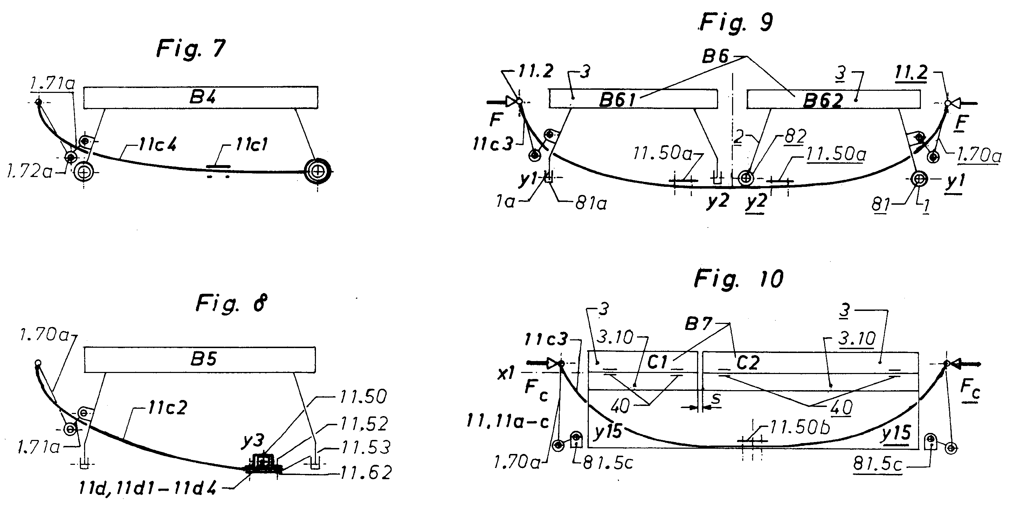

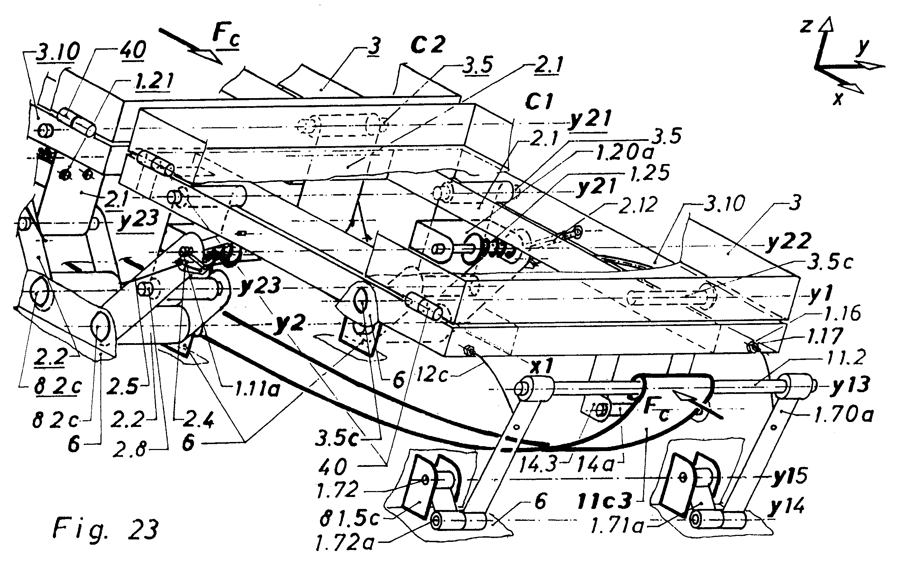

1) von den Halteplatten **81.5c** des Fahrzeugbodens in **Fig.** 10, 23 oder
2) von den Halteplatten der Sitzfüße des Sitzrahmens **3** in **Fig.** 1, 7-9, 11, 14, 16, 17.

Zur direkten oder indirekten Einleitung der Seitenaufprallenergie in den Fahrzeugboden wird die Seitenaufprallwelle gesteckt, durch:

- das Auge des Stoßdämpfers **11.10**, Federungssystems in **Fig.** 6, 12 oder der Blattfeder in **Fig.** 7-11, 14-17, 23 *oder*
- die Bohrung des Lenkers **20** einer Torsionsfeder in **Fig.** 15 *oder*
- das Rohr **5.3** des Führungs- und Schwenkhebels als Lenkers **5**, woran die Blattfeder **11c** mit dem offenen Auge in **Fig.** 20-22 zwecks freier Verformung frei anlegt. Aus dem Schweißen zweier Seitenplatten an den beiden Rohren **5.2, 5.3** ist der Lenker **5** gebildet.

Allerdings kann sich die Seitenaufprallwelle durch das Rohr oder Auge der an dem Fahrzeugboden direkt oder indirekt befestigten Blattfeder in **Fig.** 11, 14, 17, 20 bei der Längsverstellung des Sitzes frei bewegen.

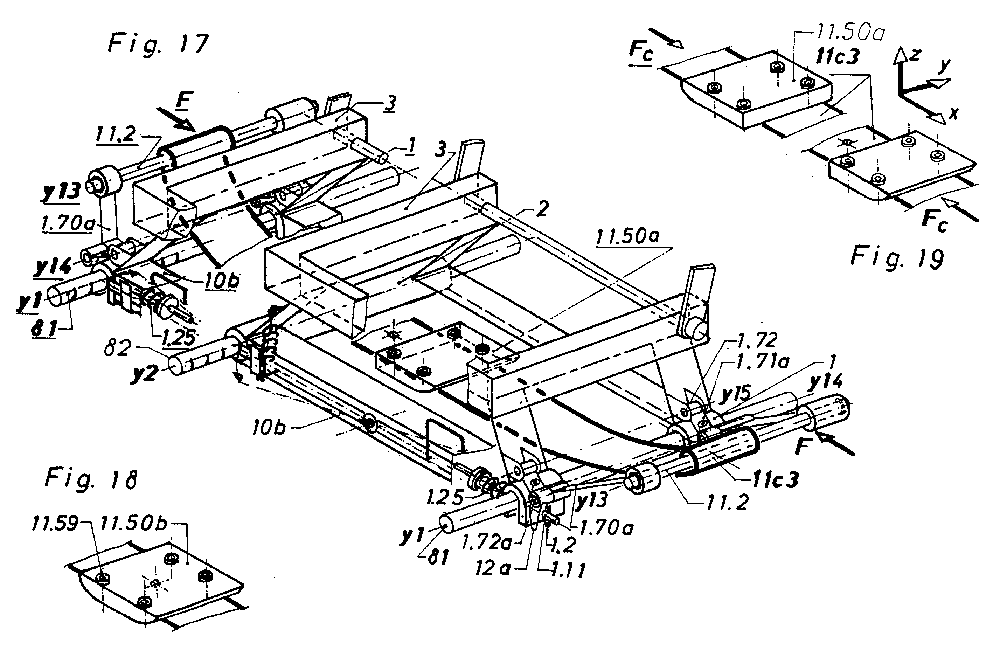

**Fig.** 1, 4-10 veranschaulichen die Anwendung aller Ersatzsysteme **B1-B7** für Sitze, zu deren Bestandteilen die herkömmlichen Schienenpaare **81a, 82a, 1a, 2a** in **Fig.** 4, 9, 11 oder die runden Schienenpaare **81, 82, 1, 2** gehören. Zur Verdeutlichung der Vertauschbarkeit wird **B61** mit den herkömmlichen Schienenpaaren, dagegen **B62** mit den runden Schienenpaaren in **Fig.** 9 gezeichnet. Normalweise kommen ausschließlich dieselben Schienenpaare zum Einsatz. Sowohl mit dieselben Schienenpaaren **81a, 82a, 1a, 2a** in **Fig.** 1 als auch mit dieselben Schienenpaaren **81, 82, 1, 2** in **Fig.** 17 ist ein gemeinsames Ersatzsystem **B6b** versehen.

Das Ersatzsystem **B5b** in **Fig.** 11 ist ein stellvertretendes Beispiel für die Verwendung der *herkömmlichen* Schienenpaare **81a, 82a, 1a, 2a** mit folgenden Nachteilen:

- Aufgrund des *nicht runden, offenen* Profils kann sich der Sitzrahmen samt Insassen weder um die y1-Achse noch um die y2-Achse schwenken. Dadurch ist der Abbau der Energie eingeschränkt. Bei einem vergleichbaren Ersatzsystem z.B. **B5a** werden die Verformungsarbeit und Verlegungsarbeit dank des runden Profils der Schienenpaare **vermehrt** verrichtet.
- Wie bereits in DE 19549378 erwähnt, besitzt das herkömmliche Schienenpaar mit offenem Profil geringeres Trägheits- und Widerstandsmoment als das Schienenpaar mit geschlossenem Profil.

Ersatzsystem **B1** mit zwei aus mehreren (drei gezeichnet) Kammern ausgebildeten Federkörperformen **11a** in **Fig.** 4 und mit zwei Verstärkungselementen **10a** zur indirekten Krafteinleitung. Im Vergleich zu EP 0565501 **A1** in **Fig.** 3 erfolgt die Kraftumleitung über die Verstärkungselemente **100, 101, 111** in den Tunnel, so daß der Insasse in unverminderter Größe unmittelbar beschleunigt wird. Zwecks *weicher Einfederung* sowie *Verzögerung* und *indirekter Krafteinleitung* ohne Beanspruchung des Sitzrahmens wird bei **B1** die Seitenaufprallenergie durch Verrichtung einer progressiven Federungsarbeit infolge des Zusammendrückens der beiden Federkörperformen mit drei Kammern abgebaut und durch die beiden Verstärkungselemente über das Schienenpaar **2, 82** oder **2a, 82a** in den Fahrzeugboden eingeleitet. Geringere Beschleunigungen bei gleichen Herstellungskosten sind das Ergebnis. Durch die *direkte* Krafteinleitung des anderen, aber teureren Ersatzsystems wie **B5a, B5b, B6a** oder **B6b** wird der Sitzrahmen in keiner Weise beansprucht, somit erfährt der Insasse keine zusätzliche Belastung als Beitrag zur Erhöhung der Überlebenschance. Zur Verstärkung des Sitzrahmens, Verbesserung der Einleitung der Energie und zum Ausnutzen des Teiles der Stoßkraft in z-Richtung für das Schwenken des Sitzes sind die gegenüberliegenden Sitzfüße des Sitzrahmens **3** durch die beiden, mit Neigungswinkel $\alpha$ versehenen Verstärkungselemente **10a**, ggf. mit Sollbruchstellen, mittels Verschrauben, Vernieten, Verschweißen oder Verkleben untereinander fest verbunden. Jede Federkörperform **11a** wird mit der im Stahlring **11.23** befindlichen, durch den Sitzfuß des Sitzrahmens **3** gesteckten Schraube **11.21** mittels Mutter **11.22** fest verschraubt. An der Sitzschiene **1** oder **1a** wird dieses Ersatzsystem angebracht, vorzugsweise in Verbindung mit der mit einer Seitenaufprallwelle versehenen Schwenkvorrichtung vor den Federkörperformen, wie **B3** vor dem Federungssystem, zwecks Sicherstellung der Energieabsorption bei unterschiedlicher Längspositionierung des Sitzes. Als wirtschaftlichste und technisch zuverlässige Lösung kommen sowohl Federkörperformen auch als Anschlag- oder Zusatzfeder **11a1** mit einem anderen Federelement wie Schraubendruckfeder **11** in **Fig.** 6 und 12 zum Einsatz.

Ersatzsystem **B2** mit Stabilisator **11.1b**, der sich aus einem sich über den Sitz erstreckenden Rückenteil **11.2** als starre Seitenaufprallwelle und zwei Schenkeln **11.7** zusammensetzt, zur indirekten Krafteinleitung in **Fig.** 5. Nach Einstecken der Lagerbuchsen **11.30, 11.35** in die Schenkel werden die U-förmigen Schrauben **11.31, 11.36** darauf gelegt. Nach Stecken durch die Befestigungslöcher der an den beiden Sitzschienen **1a, 2a** oder **1, 2** befestigten Verstärkungselemente **10b** werden sie mit Muttern **11.32, 11.37** fest verschraubt.

Über den Rückenteil und die Schenkel wird die Seitenaufprallenergie in den Fahrzeugboden eingeleitet. Durch Verschiebung des Rückenteils **11.2** unter Seitenaufprallenergie wird Federungsarbeit zum Abbau der Beschleunigungen verrichtet.

Ersatzsystem **B3** mit Mc-Pherson Federbein als Federungssystem zur indirekten Krafteinleitung in **Fig.** 6 und 12. Das Federungssystem besteht aus einer aus zwei Kammern gebildeten Hohlkörperform **11a1**, einer Schraubendruckfeder **11** und einem Stoßdämpfer **11.10**. Von der Seitenaufprallwelle **11.2** mit den Lenkern **1.71a** um die y15-Achse in **Fig.** 6 oder **1.70** in **Fig.** 12 ist das Auge des Stoßdämpfers um die y13-Achse schwenkbar geführt. Mittels Distanzscheiben **1.31** und zwei Distanzringen **1.30** wird dieses Auge in Bezug auf die Positionierung des mit der Sitzschiene **2** oder **2a** verschraubten Endes des Federungssystems justiert. Das mit Gewinde versehene Ende des Federungssystems ist an der mit der Sitzschiene **2** verschraubten Verstärkungshalterung **10c** mittels Mutter **11.8** befestigt. Wie das Mc-Pherson Federbein im PKW- Fahrschemel beweglich gelagert ist, so kann die Gummibuchse **11.12** durch die Nachgiebigkeit die kinematische Veränderung des mit der Seitenaufprallwelle **11.2** verbundenen Federungssystems ausgleichen. Bei einer Schwenkvorrichtung wie Ersatzsystem in **Fig.** 12 ist dagegen ein großer Ausgleich wegen der Drehmöglichkeit um die y2-Achse überhaupt nicht erforderlich.

Über das von der Seitenaufprallwelle **11.2** drehbar geführte Auge des Federungssystems wird die Seitenaufprallenergie in die beiden Federn **11, 11a1** und den Stoßdämpfer **11.10** eingeleitet. Infolge des Zusammendrückens der Schraubendruckfeder, z.B. Tonnenfeder mit progressiver Kennlinie in **Fig.** 25, und Hohlkörperform mit progressiver Kennlinie durch die Abdichtungs- und Anschlagsbuchse **11.9** wird eine sehr große Federungsarbeit erzielt. Durch Einfederung des Federungssystems unter Seitenaufprallenergie wird Federungsarbeit der Schraubendruckfeder und Hohlkörperform sowie Reibungsarbeit des Stoßdämpfers zur Verringerung der Beschleunigungen verrichtet, währenddessen die Restenergie über das Schienenpaar **82, 2** oder **82a, 2a** in den Fahrzeugboden eingeleitet wird.

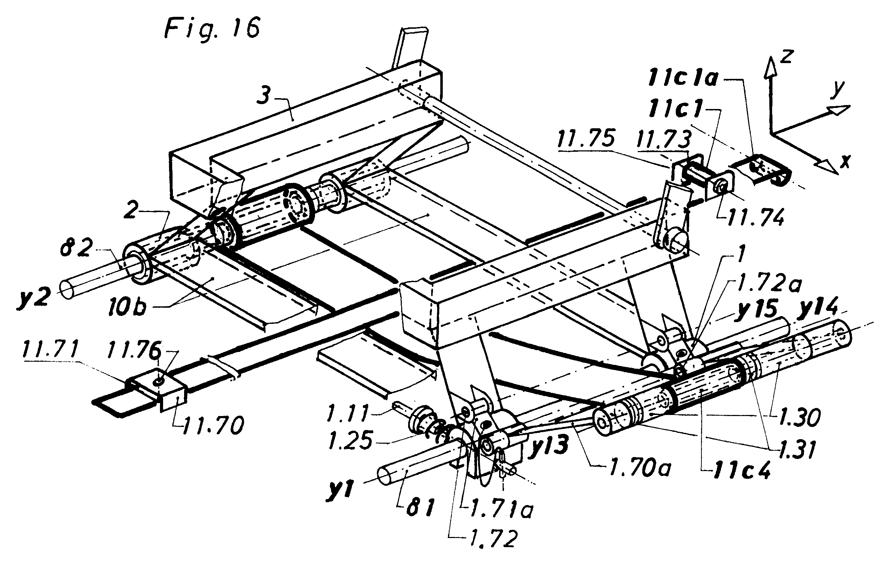

Ersatzsystem **B4** mit zwei Blattfedern **11c4, 11c1** zur indirekten Krafteinleitung in **Fig.** 7 und 16. In dem von der Führungsschiene **82** geführten Auge der Blattfeder **11c4** ist die nicht gezeichnete geräuschdämpfende Gleitbuchse oder das in **Fig.** 13 gezeichnete Kugellager **1.40** zum besseren Gleiten eingepreßt. Von der Seitenaufprallwelle **11.2** mit den Lenkern **1.70a, 1.71a** um die y15-Achse ist das Auge der Blattfeder **11c4** schwenkbar geführt. Mittels Distanzscheiben **1.31** und zwei Distanzringen **1.30** in jeder Achse werden die Positionierungen beider Augen zueinander justiert.

An dem aus Schraube **11.74** und Mutter **11.75** bestehenden Verbindungselement ist das Auge der zweiten Blattfeder **11c1** in **Fig.** 16 drehbar gelagert. Dieses Auge ist von den beiden mit dem Fahrzeugboden verschweißten Halteplatten **11.73** seitlich geführt. Um das Ein- und Aussteigen der Fondpassagiere nicht zu gefährden, wird das an dem Verbindungselement mit dem Fahrzeugboden drehbar gelagerte Auge der Blattfeder **11c1a** in der Mulde des Fahrzeugbodens versenkt.

Zur freien Verschiebung in y-Richtung während der Verformung gleitet das Ende der Blattfeder **11c1** an dem mit Haltebügel **11.70** durch Haltestift **11.76** fest verbundenen Gleitschuh **11.71**.

Über das von der Seitenaufprallwelle **11.2** geführte Auge der Blattfeder **11c4** wird die Seitenaufprallenergie in die Blattfedern **11c4, 11c1** eingeleitet. Zwecks Aufnahme des Drehmomentes stützt sich die Blattfeder **11c4** gegen die Blattfeder **11c1** und Führungsschiene **82** ab. Die gemeinsame Stützkraft übt Kraft zur Verformung der Blattfedern **11c4, 11c1** aus. Zur Verringerung der Beschleunigungen wird Federungsarbeit zweier Blattfedern **11c4, 11c1** oder **11c4, 11c1a** unter Seitenaufprallenergie verrichtet.

Ersatzsystem **B5a** mit Blattfeder **11c2** und Torsionsfeder **11d** zur direkten Krafteinleitung in **Fig.** 8 und **Fig.** 14. Nach Anlegen des steifen Haltebügels **11.50** an die Blattfeder **11c2** sowie die obere Seite der Torsionsfeder **11d** und Anbringen der steifen Halteplatte **11.53** an die untere Seite der Torsionsfeder **11d** lassen sich die Blatt- und Torsionsfeder mittels Steckverbindung durch zwei U-förmige Schrauben **11.52** und vier Muttern **11.62** miteinander fest verbinden. **Fig.** 22 zeigt die Schnittzeichnung des Haltebügels **11.50c** des Ersatzsystems **B5d** anstatt **11.50**.

Die Torsionsfeder besteht aus mehreren Flachstählen, z.B. vier in **Fig.** 14, deren Enden mit Längsloch zum Durchstecken der mit großen Unterlegscheiben **11.55** versehenen Schrauben **11.54** ausgestattet sind. Mittels Verschraubung beider Schrauben **11.54** mit Muttern **11.56** mit Gewindesicherung lassen sich die Flachstähle zu einer Torsionsfeder außerhalb der Sitzfertigung zusammenbauen. Die Verschraubung soll einerseits fest genug sein, andererseits das Reiben der Flachstähle aneinander während der Torsion erlauben. Dank der zwei an dem Fahrzeugboden angeschweißten L-Profil Positionierungsplatten **11.58** kann die Torsionsfeder in y-Richtung positioniert werden.

Die beiden steifen Haltebügel **11.51** werden mit dem Fahrzeugboden mittels Schrauben **11.57** fest verschraubt. Zur freien Verschiebung der Torsionsfeder in y3-Richtung während der Verformung ist ein Spiel zwischen jedem Kopf und dem zugehörigen Haltebügel vorgesehen. Über das von der Seitenaufprallwelle **11.2** lose geführte Auge der Blattfeder **11c2** wird die Seitenaufprallenergie in die beiden Federn **11c2, 11d** eingeleitet. Zur Verringerung der Beschleunigungen wird Federungsarbeit der Blattfeder unter Seitenaufprallenergie und Torsionsfeder bei Drehung um den Winkel $\vartheta$ verrichtet.

Ersatzsystem **B5b** mit Blattfeder **11c2** und Torsionsfeder **11d1** zur direkten Krafteinleitung in **Fig.** 8 und 11. Die Verbindung der beiden Federn **11c2, 11d1** miteinander entspricht dem Ersatzsystem **B5a** allerdings mit einer konstruktiven Änderung durch den vierkantigen Haltekörper der Torsionsfeder **11d1**.

Außer dem bereits erwähnten Nachteil durch Verwendung der herkömmlichen Schienenpaare unterscheiden sich die beiden Ersatzsysteme **B5a** und **B5b** von den konstruktiv unterschiedlichen Merkmalen *beider* Köpfe der Torsionsfeder **11d1-11d4** in **Fig.** 11 zur Momenteneinleitung durch:

- vier-, sechs- oder beliebig kantige Köpfe der Torsionsfeder **11d3** oder
- Kerbverzahnung der Torsionsfeder **11d2** z.B. nach SAE J4986 oder DIN 5481 Profilen oder
- vierkantige Köpfe zwecks Bündelung gleicher Torsionsfedern mit denselben Köpfen zu einer Torsionsfeder **11d4**.

Die beiden steifen Haltegehäuse **11.51a** werden mit dem Fahrzeugboden mittels Schrauben **11.57** fest verschraubt. Zur freien Verschiebung der Torsionsfeder in y3-Richtung während der Verformung ist ein Spiel zwischen jedem Kopf und dem zugehörigen Haltebügel vorgesehen.

Über das mit der Seitenaufprallwelle **11.2** lose geführte Auge der Blattfeder **11c2** wird die Seitenaufprallenergie in die beiden Federn **11c2** mit **11d1**, **11d2**, **11d3** oder **11d4** eingeleitet. Zur Verringerung der Beschleunigungen wird Federungsarbeit der Blattfeder unter Seitenaufprallenergie und Torsionsfeder bei Drehung um den Winkel $\vartheta$ verrichtet.

Ersatzsystem **B5c** mit Torsionsfeder **11d** zur direkten Krafteinleitung, welches mit einem steifen Lenker **20** in **Fig.** 15 zur Kraftübertragung dem Ersatzsystem **B5a** in **Fig.** 8 und 14 ohne Blattfeder **11c2** ähnelt. Nach Schieben in das vierkantige Loch des Lenkers **20** wird die Torsionsfeder z.B. **11d** mit dem Lenker mittels Schraube **20.1** fest verschraubt.

Über das mit der Seitenaufprallwelle **11.2** lose verbundene Auge des Lenkers **20** wird die Seitenaufprallenergie in die Torsionsfeder **11d** eingeleitet. Zur Verringerung der Beschleunigungen wird Federungsarbeit der Torsionsfeder unter Seitenaufprallenergie bei Drehung um den Winkel $\vartheta$ verrichtet.

Ersatzsystem **B5d** mit Blattfeder **11c** und Torsionsfeder **11d** zur direkten Krafteinleitung in **Fig.** 8 und 20-22. Nach Anlegen des steifen Haltebügels **11.50c** an die Blattfeder **11c** sowie die obere Seite der Torsionsfeder **11d** und nach Anbringen der steifen Halteplatte **11.53** an die untere Seite der Torsionsfeder **11d** lassen sich die Blatt- und Torsionsfeder mittels Steckverbindung durch zwei U-förmige Schrauben **11.52** und vier Muttern **11.62** miteinander fest verbinden. Der Zusammenbau und die Positionierung der Torsionsfeder **11d** entsprechen dem Ersatzsystem **B5a.** Über den Lenker **5** übt die Stoßkraft **F** ein Torsionsmoment aus. Dieser von der Abstützschiene **5.10** geführte Lenker wird mit der Führungsschiene **81** mittels Verbindungselement aus Schraube **5.1** und Mutter **5.5** verschraubt. Nach Überschreitung der Spannungsgrenze als Schwellwert **F** tritt Bruch an den nach FEM vorausberechneten Sollbruchstellen "b" in Abstand von $l_m$ und $l_n$ in Fig. 20 ein, wonach der Sitz *vor der Schwenkung* durch das Abstützen der Führungsschiene auf

- den Gehäusen **81.5a** und/oder
- der Abstützschiene über den Lenker

gehalten wird, um das Aufprallen des Kopfes gegen die deformierte Fahrzeugseite zu vermeiden. Siehe die eingehende Beschreibung und die Patentansprüche in DE 19549379.

Ersatzsystem **B6a** mit einer in Fahrzeugbreite liegenden Blattfeder **11c3** zur direkten Krafteinleitung als Schutzvorrichtung sowohl für Fahrer als auch für Beifahrer in **Fig.** 9 und 17. Zum Vermeiden erhöhter Kantenpressung ist die mit der verformten Blattfeder in Berührung gekommene Seite des Haltestückes als kurvenförmig ausgebildet. Daher hat das Haltestück **11.50a** in **Fig.** 19 eine kurvenförmige Seite und Haltestück **11.50b** in **Fig.** 18 zwei kurvenförmige Seiten. Nach Stecken der Schrauben **11.59** durch die Löcher eines Haltestückes **11.50b** oder beider Haltestücke **11.50a** wird die unter Haltestück **11.50b** oder Haltestücken **11.50a** liegende Blattfeder **11c3** mit dem Fahrzeugboden mittels Schrauben **11.59** fest verschraubt.

In y-Richtung unabhängig voneinander bewegen sich die beiden Sitze des Fahrers und Beifahrers, wobei die Seitenaufprallwellen **11.2, 11.2** in den zugehörigen geräuschdämpfenden Gleitbuchsen der Augen der Blattfeder **11c3** unabhängig voneinander gleiten.

Durch Einsatz einer *einzigen* Blattfeder **11c3** für Auto mit Frontantrieb als Schutzvorrichtung sowohl für Fahrer als auch für Beifahrer werden Kosten gespart. Zur Verringerung der Beschleunigungen wird Federungsarbeit der Blattfeder **11c3** unter Seitenaufprallenergie in einer oder beiden Richtungen verrichtet.

Ersatzsystem **B6b** mit je einer querliegenden Blattfeder **11c3** zur direkten Krafteinleitung als Schutzvorrichtung für Fahrer oder für Beifahrer in **Fig.** 1, 9 und 17. Nach Stecken der Schrauben **11.59** durch die Löcher des Haltestückes **11.50a, 11.50b** wird die unter dem Haltestück liegende Blattfeder **11c3** mit dem Fahrzeugboden mittels Schrauben **11.59** fest verschraubt.

Ersatzsystem **B7** mit einer einzigen querliegenden Blattfeder **11c3** zur Kostenersparnis beim Schutz der auf den zwei geteilten Sitzteilen des Hintersitzes **C1, C2** sitzenden Insassen in **Fig**. 23. In Anlehnung an die Sicherheitsvorkehrung zur Unterbringung eines Benzintanks unter dem Hintersitz vor dem Kofferraum muß jedes Sitzteil mit einer dem Tunnel zugewandten Schwenkvorrichtung mit zwei Paar Sperrmechanismen **S4** gemäß DE 19549379 um die y2-Achse ausgestattet sein, allerdings mit dem *Unterschied* durch den Verzicht auf Schienenpaare.

Das Sitzteil **C1** setzt sich aus einem steifen Sitzrahmen **3** und Unterrahmen **3.10** zusammen. An den beiden Schwenkbolzen **3.5c** in y1-Achse und Schwenkbolzen **3.5** der 2. Schwenkvorrichtung ist der Unterrahmen **3.10** schwenkbar gelagert. Durch diese Lagerung und die feste Verbindung mit den beiden längsverstellbaren Distanzplatten **2.12** unter Zuhilfenahme der Verbindungselemente wird der Unterrahmen **3.10** schwenkfest gehalten. Mit den zugehörigen Unterrahmen **3.10, 3.10** sind die beiden Sitzrahmen **3, 3** mittels vierer Scharniere **40, 40** drehbar verbunden. Nach Entriegelung zur Vergrößerung des Laderaumes lassen sich die Rückenlehnen voneinander unabhängig umklappen. Mittels Schrauben **11.59** und eines **11.50b** in **Fig.** 18 oder zwei Haltestücke **11.50a** in **Fig.** 19 wird diese Blattfeder **11c3** mit dem Fahrzeugboden fest verschraubt.

Die Beschreibung beschränkt sich aufeinen der beiden Sperrmechanismen **S4** der 2. Schwenkvorrichtung mit einer konstruktiven Anpassung durch einen Schwenkbolzen **82c**. Der Schwenkhebel **2.1** ist Scharnierband mit zwei eingerollten Augen zur Aufnahme der Schwenkbolzen **3.5, 2.8**. Am Schwenkbolzen **3.5** der Halterung des Unterrahmens in y21-Achse ist das Auge des Schwenkhebels **2.1** drehbar gelagert, das andere am Schwenkbolzen **2.8** des Schwenkhebels **2.2**. Nach Stecken der von der Feder **1.25** vorgespannten Welle **1.11a** einer Baueinheit durch die Bohrungen der Distanzplatte **2.12** und des Schwenkhebels **2.2** wird das Gehäuse **1.20a** der Baueinheit mit dem Rücken des Schwenkhebels **2.1** mittels Schrauben **1.21** (**1.21** gezeichnet) fest verschraubt. Dadurch ist der Schwenkhebel **2.1** mit dem an dem Schwenkbolzen **82c** des Fahrzeugbodens **6** drehbar gelagerten Schwenkhebel **2.2** fest verbunden. Als Verbindungsstück beider Schwenkhebel mit dem Unterrahmen dient die längsverstellbare drehbare Distanzplatte **2.12** ferner zur Einstellung der horizontalen Stellung des Sitzflächenteiles. Nach fester Verschraubung der Verbindungselemente der Distanzplatte **2.12** steht der Unterrahmen mit dem Sperrmechanismus in fester Verbindung.

Nach Sicherung der federbelasteten Welle **1.11a** durch Schieben des Kreissegmentes der am Stift drehbar geführten Haltescheibe **2.4** in die Nut der Welle **1.11a** sind die beiden Schwenkhebel **2.1, 2.2** und die anderen Teile untereinander verriegelt. Nach Einrasten des Drahtendes des Auslösekabels **12c** in das Halteloch der L-Profil Haltescheibe erfolgt das Einrasten des anderen Drahtendes ins Halteloch des Lenkers **1.70a**. Durch Verschieben der Distanzhülse **1.16** im Loch des Unterrahmens wird das Spiel bestimmt. Anschließend werden die vor und hinter der Wand des Unterrahmens befindlichen Muttern **1.17** am Gewinde der Distanzhülse gegeneinander fest angezogen. Der Schenkel der Schenkelfeder **2.5** wird in das Loch der Haltescheibe gesteckt und der andere U-förmige Schenkel auf die Kante zur Vorspannung bzw. Rückstellkraft gelegt.

Die Einstellung der beiden Muttern **1.17** am Gewinde der Distanzhülse **1.16** und die Größe des Kreissegmentes der Haltescheibe **2.4** beeinflussen den Eingriff des Kreissegmentes in die Nut der Welle **1.1a**. Vorausberechnet wird der Schwellwert $F_3$, der für die Einfederung des Federelementes **11c3** bis zur Entriegelung der Eingriffstellung des Kreissegmentes in der Nut durch Rückstellkraft der Schenkelfeder **2.5** erforderlich ist. Nach Überschreitung dieses Schwellwertes $F_3$ löst sich die Verbindung der beiden Schwenkhebel **2.1, 2.2** und Distanzplatte **2.12** auf.

Nach Schieben in die Löcher der steifen Halterungsplatten **14.3** des Unterrahmens **3.10** wird das Auslöserohr **14a** mittels zwei nicht gezeichneten Sicherungsringen gesichert. Über die Seitenaufprallwelle **11.2** übt die Stoßkraft $F_c$ Kraft auf die Blattfeder **11c3** aus. Nach Überschreitung des Schwellwertes $F_3$ lösen sich die beiden Verbindungen der Schwenkhebel **2.1, 2.2** und Distanzplatten **2.12** bei den beiden Sperrmechanismen auf. Drehbar und unabhängig voneinander sind von jetzt an die beiden Schwenkhebel **2.1, 2.2** um die Achsen und y2-Achse. Bei Zunahme der Stoßkraft $F_c$ wird die Blattfeder **11c3** weiter verformt. Durch zunehmende Intrusion berührt die verformte Blattfeder **11c3** zuerst das steife Auslöserohr **14a**, dann drückt es hoch.

Während sich der Unterrahmen **3.10** um die y1-Achse schwenkt, verändern sich die drehbaren Schwenkhebel **2.1, 2.2** kinematisch entsprechend der Arbeitsweise der Schwenkvorrichtung **A1** nach DE 19549379. Allerdings wird die zu erwartende Insassenverlegung bezüglich der Auslenkung der Kopfmitte wegen der konstruktiven Bedingung für den Spalt s zwischen den beiden Sitzteilen **C1** und **C2** beeinträchtigt.

Dieser Spalt ist verantwortlich für das Nichtverhaken der beiden Sitzteile untereinander während des voneinander unabhängigen

- Schwenkens um die y1-Achse sowie um die <u>y1</u>-Achse *oder*
- Umklappens um die jeweiligen Achsen der Scharniere.

Durch Verrichtung einer Federungs- und Verlegungsarbeit zur Verringerung der Beschleunigungen wird die Seitenaufprallenergie abgebaut.

Einsetzbar für Fahrzeugsitz oder Einzelsitz ohne Längsverstellung ist das Ersatzsystem **B7** mit oder ohne Scharniere **40, <u>40</u>** und Sitzrahmen **3, <u>3</u>** bei Einsatz der Unterrahmen als Sitzrahmen. Zur Hintereinanderschaltung der Ersatzsysteme für die vorderen und nachfolgenden Sitze bei Verwendung eines einzigen längsliegenden Teiles verfolgt die Erfindung Kostensenkung. Unter dem Begriff "vordere und nachfolgende Sitze" versteht man die n- reihigen Sitze aus der 1., 2. bis zur n. Sitzreihe, z.B. zweireihige Sitze bei PKW und beliebig reihige Sitze bei Vans, Großlimousinen und Bussen.

**Patentansprüche**

1. Seitenairbag-Ersatzsystem eines Fahrzeugsitzes mit mindestens zwei Paar herkömmlichen Schienen **(1a, 2a, 81a, 82a)** oder runden Schienen **(1, 2, 81, 82)** in y1- und y2-Achse, dessen

   - Federelemente, Federkörperformen, Stoßdämpfer, Reibungsdämpfer und/oder
   - Federungssysteme

   als energieabsorbierende Teile für die Verformungsarbeiten, Erhöhung der Zuverlässigkeit, Kostensenkung und Minimierung der Verletzungsschwere bei realem Seitenaufprall verantwortlich sind, **dadurch gekennzeichnet**, daß aus

   a) einer am Fahrzeugsitz oder Fahrzeugboden (6) drehbar gelagerten Schwenkvorrichtung bestehend aus drehbaren Lenkern und einer Seitenaufprallwelle **(11.2, <u>11.2</u>)**, welche zwischen dem Fahrzeugsitz und der Fahrzeugtür **(8, <u>8</u>)** sowie möglichst über den Fahrzeugsitz hinaus angeordnet ist, und
   b) mindestens einem energieabsorbierenden, in Wirkstellung gegen die Hauptrichtung des Seitenaufpralles gerichteten Teil

   * dessen eines Ende an der Seitenaufprallwelle drehbar, freianlegend oder zwischen der Seitenaufprallwelle und dem Fahrzeugsitz sowie
   * dessen anderes Ende am Fahrzeugboden oder Fahrzeugsitz angeordnet ist,

   ein Ersatzsystem **(B1 bis B7)** gebildet ist, welches
   c) die Verformungsarbeit infolge der an der Seitenaufprallwelle wirkenden Stoßkraft **F** bei Krafteinleitung oder Einleitung der Seitenaufprallenergie in den Fahrzeugboden zwecks

   - Verringerung der von Stoßbeschleunigung **b** abhängigen Massenkraft $F_B$,
   - Nichtbeanspruchung oder geringer Beanspruchung des Fahrzeugsitzes bei Berührung jenes energieabsorbierenden Teiles mit dem Sitzrahmen **(3, <u>3</u>)** und
   - Verlängerung der Auslösezeit, so daß, falls das Seitenairbag-Ersatzsystem mit Sicherheitsairbag versehen ist, ein aufgeblasener Sicherheitsairbags **(80, <u>80</u>)** zwischen die deformierte Fahrzeugtür und den durch Massenkraft geneigten Oberkörper geschoben werden kann,

   verrichtet.

2. Ersatzsystem nach Anspruch 1, dadurch gekennzeichnet, daß aus

   a) dem Fahrzeugsitz mit mindestens zwei runden Schienenpaaren **(1, 2, 81, 82)** und
   b) einer am Fahrzeugsitz, Fahrzeugboden oder an mindestens einer Führungsschiene **(81, 82)** drehbar gelagerten Schwenkvorrichtung,
   c) welche mindestens einen mit Schwellwert ausgestatteten Sperrmechanismus besitzt, ein um die y1- und/oder y2-Achse schwenkbares Ersatzsystem gebildet ist, welches durch Zunahme der Stoßkraft **F**
   d) mehr Verformungsarbeiten bei Krafteinleitung in den Fahrzeugboden,
   e) die Brucharbeit nach Überschreitung des Schwellwertes zur Entriegelung jenes Sperrmechanismus und

f) die Arbeit zur Verlegung des auf diesem Fahrzeugsitz sitzenden Insassen aus den Gefahrenzonen in die Fahrzeugmitte

zwecks

- Schutz des Insassen, vor allem des Kopfes, vor der Intrusion der deformierten Fahrzeugteile,
- weiterer Verringerung der Massen- $F_B$ und Drehträgheitskräfte $F_D$,
- Nichtbeanspruchung oder geringer Beanspruchung des Fahrzeugsitzes bei Berührung mindestens eines energieabsorbierenden Teiles mit dem Sitzrahmen (3, 3) und
- großwerdender Auslösezeit

verrichtet.

3. Ersatzsystem nach mindestens einem der vorgenannten Ansprüche, dadurch gekennzeichnet, daß die Enden der Seitenaufprallwelle (11.2) an einem Paar drehbaren Lenkern (1.70a, 1.71a) drehbar gelagert sind, deren andere Enden:

- (1.71a) von den Halteplatten der Sitzfüße des Sitzrahmens (3) seitlich geführt sowie an den Lagerbolzen (1.72) um die y15-Achse drehbar gelagert sind, oder
- (1.70a) mit einem Paar drehbaren Lenkern (1.71a) an den gemeinsamen Lagerbolzen (1.72a) um die y14-Achse schwenkbar sowie die anderen Enden jener Lenker (1.71a) an den Lagerbolzen (1.72) um die y15-Achse drehbar gelagert sind und jene Lenker

  * von den Halteplatten (81.5c) des Fahrzeugbodens (6); oder
  * von den Halteplatten der Sitzfüße des Sitzrahmens (3) seitlich geführt sind.

4. Ersatzsystem nach mindestens einem der vorgenannten Ansprüche, dadurch gekennzeichnet, daß die Enden der Seitenaufprallwelle (11.2) an einem Paar drehbaren Lenkern (1.70) schwenkbar gelagert und die anderen Enden von der runden Führungsschiene (81) entlang der y1-Achse seitlich geführt sind, so daß durch die Berührung mindestes eines Lenkers mit einem Sitzfuß des Sitzrahmens (3) während der Sitzverstellung die Schwenkvorrichtung in y1-Richtung bewegt wird.

5. Ersatzsystem nach mindestens einem der vorgenannten Ansprüche, dadurch gekennzeichnet, daß die Schwenkvorrichtung mit mindestens einem energieabsorbierenden Teil verbunden ist, durch Stecken deren Seitenaufprallwelle (11.2) durch

- das Auge des Stoßdämpfers (11.10), Federungssystems oder einer der Blattfeder (11c2 bis 11c4); oder
- die Bohrung des Lenkers (20), woran eine Torsionsfeder befestigt ist; oder
- das Rohr (5.3) des Lenkers (5), woran das offene Auge der Blattfeder (11c) zwecks freier Verformung frei anlegt.

6. Ersatzsystem nach Anspruch 5, dadurch gekennzeichnet, daß die Bohrung, das Rohr oder Auge mit Gleitbuchse zwecks Gleiten entlang der Seitenaufprallwelle während der Sitzverstellung in Längsrichtung versehen ist.

7. Ersatzsystem nach mindestens einem der vorgenannten Ansprüche, dadurch gekennzeichnet, daß das Auge entlang der Seitenaufprallwelle mittels Distanzscheiben (1.31) und mindestens eines Distanzringes (1.30) positionierbar ist.

8. Ersatzsystem nach mindestens einem der Ansprüche 1 bis 2, dadurch gekennzeichnet, daß die Seitenaufprallwelle (11.2) durch Rückenteil eines Stabilisators (11b) ersetzbar ist.

9. Ersatzsystem nach Anspruch 8, dadurch gekennzeichnet, daß beide Schenkel (11.7) des Stabilisators mit jeweils zwei Lagerbuchsen (11.30, 11.35) versehen sind, worauf U-förmige Schrauben (11.31, 11.36) umgelegt, durch die Befestigungslöcher der an den beiden Sitzschienen (1a, 2a oder 1, 2) angeschweißten Verstärkungselemente (10b) gesteckt und mit Muttern (11.32, 11.37) verschraubt sind.

10. Ersatzsystem nach mindestens einem der vorgenannten Ansprüche, dadurch gekennzeichnet, daß die Arbeitsfläche des Federelementes bei zunehmender Belastung progressiv verläuft, infolge zunehmendem

- Abwälzen einseitiger oder beidseitiger nichtzylindrischer Schraubendruckfeder **(11)**, vorzugsweise mit variablem Stabdurchmesser, auf einer Federunterlage **(11.15)** oder auf beiden Federunterlagen; *oder*
- Abwälzen einer oder mehrerer Zusatzblattfedern $Z_1$, $Z_2$,...$Z_n$ in Zuordnung zu ihren Krümmungen $K_1$, $K_2$,...$K_n$ auf der Hauptfeder $Z_0$ der Blattfeder **(11c3, 11c)**, vorzugsweise mit variabler Blattdicke; *oder*
- Abwälzen der Windungen einer zylindrischen Schraubendruckfeder aufeinander, *oder*
- Zusammendrücken einer Federkörperform versehen mit mindestens zwei Kammern R1, R2 und/oder mit mindestens zwei Materialien M1, M2, welche unterschiedliches Elastizitäts- und Gleitmodul aufweisen.

11. Ersatzsystem nach mindestens einem der vorgenannten Ansprüche, dadurch gekennzeichnet, daß das Federelement mit mindestens einer Sollbruchstelle, deren Steifigkeit gezielt geschwächt wird, versehen ist.

12. Ersatzsystem nach mindestens einem der vorgenannten Ansprüche, dadurch gekennzeichnet, daß zum Vermeiden der erhöhten Kantenpressung jede mit der verformten Blattfeder in Berührung gekommene Seite des auf der Blattfeder liegenden Haltestückes **(11.50a, 11.50b)** als kurvenförmig ausgebildet ist.

13. Ersatzsystem nach mindestens einem der vorgenannten Ansprüche, dadurch gekennzeichnet, daß zum Erleichtern des Ein- und Aussteigens der Fondpassagiere das Auge der Blattfeder **(11c1a)** in der Mulde des Fahrzeugbodens versenkt und an einem aus Schraube **(11.74)** und Mutter **(11.75)** bestehenden Verbindungselement des Fahrzeugbodens drehbar gelagert ist.

14. Ersatzsystem nach mindestens einem der Ansprüche 1 bis 11, dadurch gekennzeichnet, daß die Torsionsfeder **(11d)** besteht aus Flachstählen mit Längslöchern an beiden Enden, wodurch die mit großen Unterlegscheiben **(11.55)** versehenen Schrauben **(11.54)** gesteckt und mit Muttern **(11.56)** ausreichend fest verschraubt sind, so daß während der Verformung der gebündelten Torsionsfeder die ausreichend feste Verschraubung das Reiben jener Flachstähle aneinander zuläßt, zwecks Verrichtung der Federungs- und Reibungsarbeit.

15. Ersatzsystem nach mindestens einem der Ansprüche 1 bis 11, dadurch gekennzeichnet, daß beide Enden der Torsionsfeder versehen sind mit

- vier-, sechs- oder beliebig kantigen Köpfen der Torsionsfeder **(11d1, 11d3)**; *oder*
- Köpfen der Torsionsfeder **(11d2)** versehen mit Kerbverzahnung; *oder*
- vierkantigen Köpfen zwecks Bündelung gleicher Torsionsfedern mit denselben Köpfen zu einer Torsionsfeder **(11d4)**.

16. Ersatzsystem nach mindestens einem der Ansprüche 14 und 15, dadurch gekennzeichnet, daß zwei L-Profil Positionierungsplatten **(11.58)** zur Positionierung der Torsionsfeder am Fahrzeugboden fest angebracht ist..

17. Ersatzsystem nach mindestens einem der vorgenannten Ansprüche, dadurch gekennzeichnet, daß mindestens ein mit Neigungswinkel $\alpha$ versehenes Verstärkungselement **(10a)** mit beiden Innenseiten der gegenüberliegenden Sitzfüße des Sitzrahmens **(3)** kraftschlüssig verbunden ist.

18. Ersatzsystem nach Anspruch 17, dadurch gekennzeichnet, daß mindestens ein der Verstärkungselemente **(10a)** mit mindestens einer Sollbruchstelle versehen ist.

19. Ersatzsystem nach mindestens einem der vorgenannten Ansprüche, gekennzeichnet durch Bildung des Ersatzsystems

- **(B1)** aus zwei Verstärkungselementen **(10a)** und zwei Federkörperformen **(11a)**, wovon jede mit einem Stahlring **(11.23)** sowie einer Schraube **(11.21)** versehen und am Sitzfuß des Sitzrahmens **(3)** nach Durchstecken jener Schraube und Verschraubung mit Mutter **(11.22)** befestigt ist; *oder*
- **(B3)** aus einer Hohlkörperform **(11a1)**, Schraubendruckfeder **(11)**, Gummibuchse **(11.12)** und einem Stoßdämpfer **(11.10)**, welches ein Federungssystem ist, dessen erstes Ende mit der Seitenaufprallwelle **(11.2)** der Schwenkvorrichtung drehbar und dessen anderes Ende mit der an der Sitzschiene **(2 oder 2a)** fest angebrachten Verstärkungshalterung **(10c)** mittels Mutter **(11.8)** kraftschlüssig verbunden ist; *oder*
- **(B5a** oder **B5b)** aus einer Blattfeder **(11c2)**, deren Auge mit der Seitenaufprallwelle **(11.2)** der Schwenkvorrichtung drehbar verbunden ist, und einer Torsionsfeder **(11d, 11d1 bis 11d4)**, welche kraftschlüssig verbunden ist

    \*     mit dem anderen Ende jener Blattfeder mittels der an Halteplatte **(11.53)** und durch Haltebügel **(11.50)** angeordneten, U-förmigen Schrauben **(11.52)** und Muttern **(11.62)** sowie

    \*     mit dem Fahrzeugboden mittels der durch beide Haltebügel **(11.51)** oder Haltegehäuse **(11.51a)** gesteckten Schrauben **(11.57)** nach Positionierung zwischen beiden L-Profil Positionierungsplatten **(11.58)**; *oder*

- **(B5d)** aus einer Blattfeder **(11c)**, deren offenes Auge an das Rohr des Lenkers **5** der Schwenkvorrichtung frei anlegt, und einer Torsionsfeder **(11d, 11d1 bis 11d4)**, welche kraftschlüssig verbunden ist

    \*     mit dem anderen Ende jener Blattfeder mittels der an Halteplatte **(11.53)** und durch Haltebügel **(11.50c)** angeordneten, U-förmigen Schrauben **(11.52)** und Muttern **(11.62)** sowie

    \*     mit dem Fahrzeugboden mittels der durch beide Haltebügel **(11.51)** oder Haltegehäuse **(11.51a)** gesteckten Schrauben **(11.57)** nach Positionierung zwischen beiden L-Profil Positionierungsplatten **(11.58)**; *oder*

- **(B5c)** aus einem steifen Lenker **(20)** mit Loch und einer Torsionsfeder **(11d, 11d1 bis 11d3)**, welche mit

    \*     dem Fahrzeugboden mittels der durch beide Haltebügel **(11.51)** gesteckten Schrauben **(11.57)** nach Positionierung zwischen beiden L-Profil Positionierungsplatten **(11.58)** und

    \*     dem Loch des Lenkers **(20)** mittels Schraube **(20.1)** nach Einschieben kraftschlüssig verbunden ist; *oder*

- **(B6b)** aus einer unter einem Haltestück **(11.50a, 11.50b)** liegenden Blattfeder **(11c3)**,

    \*     deren eines Ende mit dem Fahrzeugboden mittels Schrauben **(11.59)** nach Einstecken in jenes Haltestück kraftschlüssig und

    \*     deren anderes Ende mit der Seitenaufprallwelle **(11.2)** der Schwenkvorrichtung drehbar verbunden ist.

20. Ersatzsystem nach mindestens einem der Ansprüche 1 bis 18, dadurch gekennzeichnet, daß für zwei nebeneinanderliegende Fahrzeugsitze eine einzige, in x-Richtung angeordnete Blattfeder **(11c3)** des Ersatzsystems **(B6a)** vorgesehen ist, welche

- mit der beiden Schwenkvorrichtungen durch Einstecken der Seitenaufprallwellen **(11.2, 11.2)** in die beiden mit Gleitbuchsen der Augen drehbar und

- mit dem Fahrzeugboden mittels der in die Löcher eines steifen Haltestückes **(11.50b)** oder zweier steifer Haltestücke **(11.50a)** gesteckten Schrauben **(11.59)** kraftschlüssig

verbunden ist.

21. Ersatzsystem nach mindestens einem der Ansprüche 1 bis 18, dadurch gekennzeichnet, daß das Ersatzsystem **(B4)** für Fahrzeugsitz mit Schienenpaaren **(1, 2, 81, 82)** besteht aus

- einer Blattfeder **(11c1 oder 11c1a)**, deren Auge als erstes Ende mit einem aus der durch die am Fahrzeugboden befestigten Halteplatten **(11.73)** gesteckten Schraube **(11.74)** und Mutter **(11.75)** bestehenden Verbindungselement drehbar verbunden ist und deren anderes Ende an dem mit einem am Fahrzeugboden befestigten Haltebügel **(11.70)** mittels Haltestift **(11.76)** fest verbundenen Gleitschuh **(11.71)** während der Verformung gleitet, und

- einer unter jener Blattfeder frei bewegbaren Blattfeder **(11c4)**, deren erstes Auge von der Führungsschiene **(82)** geführt und deren anderes Auge mit der Seitenaufprallwelle **(11.2)** der Schwenkvorrichtung drehbar verbunden ist.

22. Ersatzsystem nach mindestens einem der Ansprüche 1 bis 2, dadurch gekennzeichnet, daß sich die um die y2-Achse drehbare Schwenkvorrichtung des Sitzteiles **(C1, C2)** aus zwei schwenkbaren Sperrmechanismen **(S4)** zusammensetzt, wovon jeder Sperrmechanismus besteht aus:

- einem an dem Schwenkbolzen **(82c)** des Fahrzeugbodens (6) um die y2-Achse drehbar gelagerten Schwenkhebel **(2.2)**,

- einem Schwenkhebel **(2.1)** als Scharnierband mit zwei eingerollten Augen zur Aufnahme eines Schwenkbolzens **(3.5)** des Unterrahmens **(3.10)** und eines anderen Schwenkbolzens **(2.8)** des Schwenkhebels **(2.2)** und

- einer längsverstellbaren Distanzplatte **(2.12)**, die zusammen mit Verbindungselementen als Verbindungsstück der beiden Schwenkhebel **(2.1, 2.2)** mit dem Unterrahmen dient,

EP 0 844 939 B1

wobei nach Stecken der Von Feder **(1.25)** vorgespannten Welle **(1.11a)** einer Baueinheit durch die Bohrungen der Distanzplatte **(2.12)** und des Schwenkhebels **(2.2)** und nach Befestigen des Gehäuses **(1.20a)** der Baueinheit an dem Rücken des Schwenkhebels **(2.1)** mittels Schrauben **(1.21)** diese Schwenkteile **(2.2, 2.1, 2.12)** untereinander verriegelt sind, wonach nach Einschieben des Kreissegmentes der am Stift drehbar geführten, von der Schenkelfeder **(2.5)** vorgespannten Haltescheibe **(2.4)** in die Nut der federbelasteten Welle **(1.11a)** der Verriegelungszustand aufrechterhalten bleibt, aber durch die an der Seitenaufprallwelle wirkende Stoßkraft und die Rückstellkraft der Schenkelfeder **(2.5)** dreht sich die Haltescheibe **(2.4)** am Stift zum Aufheben des Verriegelungszustandes und zur Freigabe der Welle **(1.11a)**, mit der Folge der Entriegelung jener Schwenkteile.

23. Ersatzsystem nach mindestens einem der Ansprüche 1 bis 18 und 22, dadurch gekennzeichnet, daß der Fahrzeugsitz ohne Schienenpaar aus zwei klappbaren, durch den Spalt s getrennten, nebeneinanderliegenden Sitzteilen **(C1, C2)** mit je zwei Schwenkvorrichtungen besteht, wovon jedes Sitzteil **(C1** oder **C2)** sich aus einem steifen Sitzrahmen **(3** oder <u>**3**</u>**)** und Unterrahmen **(3.10** oder <u>**3.10**</u>**)** zusammensetzt, welcher mit einem Paar Scharnieren **(40)** für das Umklappen zur Vergrößerung des Laderaumes versehen und an beiden Schwenkbolzen **(3.5c)** um die y1-Achse sowie an beiden Schwenkbolzen **(3.5)** der aus zwei Sperrmechanismen **(S4)** bestehenden ersten Schwenkvorrichtung um die y21-Achse schwenkbar gelagert ist, deren Schwenkhebel **(2.1, 2.2)** und andere Teile paarweise durch Eingriff der federbelasteten Haltescheiben **(2.4)** in die Nuten der federbelasteten Wellen **(1.11a)** untereinander verriegelt sind, wobei diese Haltescheiben **(2.4)** über die Auslösekabel **(12c)** mit einer zweiten, der Fahrzeugseite oder -tür **(8)** zugewandten Schwenkvorrichtung verbunden und durch Federkraft der Blattfeder **(11c3)** gehalten ist, aber infolge der Einleitung der Stoßkraft an die Seitenaufprallwelle **(11.2)** der zweiten Schwenkvorrichtung ist die Blattfeder **(11c3)** verformt, zur Entsicherung der mit der zweiten Schwenkvorrichtung über die Auslösekabel verbundenen Haltescheiben **(2.4)** von den federbelasteten Wellen **(1.11a)** und dann zur Entriegelung der Schwenkhebel **(2.1, 2.2)** und anderen Teile, mit der Folge der Schwenkung des Unterrahmens **(3.10)** um die y1 und y2-Achse, welche durch die Berührung der verformten Blattfeder **(11c3)** mit dem steifen Auslöserohr **(14a)** des Unterrahmens bei Intrusion verstärkt wird.

24. Ersatzsystem nach mindestens einem der Ansprüche 1 bis 21, dadurch gekennzeichnet, daß bei Verzicht auf Schienenpaare das Ersatzsystem eines Fahrzeugsitzes, dessen Sitzrahmen **(3,** <u>**3**</u>**)** am Fahrzeugboden befestigt ist, die gleichen Merkmale aufweist.

25. Ersatzsystem nach mindestens einem der vorgenannten Ansprüche, gekennzeichnet durch Hintereinanderschaltung der Ersatzsysteme des vorderen Sitzes und der nachfolgenden Sitze durch Verwendung von

   - einer längsliegenden Torsionsfeder **(11d, 11d1 bis 11d4)**, woran die hintereinandergeschalteten Blattfedern oder Lenker **(20)** befestigt sind; *oder*
   - einer längsliegenden Blattfeder **(11c1, 11c1a)**, worunter die hintereinandergeschalteten Blattfedern **(11c4)** angeordnet sind, wovon eine von der Führungsschiene **(82)** des vorderen Fahrzeugsitzes entlang der y2-Achse geführt ist und die anderen mit dem Fahrzeugboden mittels Schrauben **(11.59)** bei Verwendung der Haltestücke **(11.50a, 11.50b)** für die nachfolgenden Sitze verschraubt sind; *oder*
   - einer längsliegenden Torsionsfeder im Tunnel **(6.1)** eines Frontantriebs, woran die hintereinandergeschalteten Ersatzsysteme der linken und rechten Sitzreihen versetzt befestigt sind; *oder*
   - einer in einer längsliegenden Mulde des Fahrzeugbodens versenkten Torsionsfeder, woran die hintereinandergeschalteten Ersatzsysteme der linken und rechten Sitzreihen versetzt befestigt sind; *oder*
   - zwei neben dem Tunnel **(6.1)** längsliegenden, im Fahrzeugboden versenkten Torsionsfedern, welche mit den hintereinandergeschalteten Ersatzsysteme der linken und rechten Sitzreihen kraftschlüssig verbunden sind.

26. Ersatzsystem mit Sicherheitsairbag nach mindestens einem der vorgenannten Ansprüche, gekennzeichnet durch Auswertung der

   - Verformung der Seitenaufprallwelle **(11.2,** <u>**11.2**</u>**)** der Schwenkvorrichtung zur Erkennung der Größe der Seitenaufprallenergie;
   - Verformung mindestens eines energieabsorbierenden Teiles der Schwenkvorrichtung zur Erkennung der Größe der Seitenaufprallenergie; *und/oder*
   - erzwungenen Schwingung beim Stoßdämpfer zur Erkennung der Größe der Stoßgeschwindigkeit **v**.

27. Ersatzsystem mit Sicherheitsairbag nach Anspruch 26, dadurch gekennzeichnet, daß als Sicherheitsairbag **(80,** <u>**80**</u>**)** der Frontairbag den Insassenschutz sowohl beim Frontaufprall als auch beim Seitenaufprall übernimmt.

**28.** Ersatzsystem mit Sicherheitsairbag nach Anspruch 27, dadurch gekennzeichnet, daß der Sicherheitsairbag **(80 oder 80)** mindestens zwei selbständige Hüllen **(80A, 80B oder 80A, 80B)** aufweist, wovon die Hülle **(80A, 80A)** mit mindestens zwei Gasgeneratoren versehen ist, welche beim Seitenaufprall zur Zündung aktiviert werden, aber einer davon beim Frontaufprall.

**29.** Ersatzsystem mit Sicherheitsairbag nach mindestens einem der Ansprüche 27 und 28, dadurch gekennzeichnet, daß die Hülle **(80A, 80A)** durch mindestens eine Zusatzhülle **(80C, 80C)** erweiterbar ist, welche mit mindestens einem eigenen Gasgenerator versehen ist und zusammen mit der zugehörigen Hülle **(80A, 80A)** ausschließlich beim Seitenaufprall ausgelöst wird.

**30.** Ersatzsystem mit Sicherheitsairbag nach mindestens einem der Ansprüche 27 bis 29, gekennzeichnet durch Nichtaktivieren des Gasgenerators der Hülle **(80B, 80B)** beim Seitenaufprall.

**31.** Ersatzsystem nach mindestens einem der vorgenannten Ansprüche, gekennzeichnet durch Verwendung von Metallen, Verbundmaterialien, glasfaserverstärkten oder nichtmetallischen Werkstoffen für das Material der Federelemente, Federkörperformen, Stoßdämpfer, Verstärkungselemente, Sitzteile, Lenker, Seitenaufprallwelle und Teile der Schwenkvorrichtung.

**Claims**

1. A side airbag-substitute of vehicle seat **(3, 3)** equipped with at least two pairs of conventional rails **(1a, 2a, 81a, 82a)** or of round rails **(1, 2, 81, 82)** about the y1- and/or y2-axis and energy-absorbing members such as

   - spring elements, compression spring blocks, shock absorbers, friction absorbers; and/or
   - suspension systems

   which are responsible for works of deformation, increase of the reliability, costs cut and decrease of injury severities in the event of real side collision, wherein each of the substitutes **(B1 to B7)** comprising

   a) a rotatable device pivotally attached to said seat or the vehicle floor **(6)** consisting of rotatable levers and a side impact shaft **(11.2, 11.2)** disposed between said seat and the vehicle door **(8, 8)** and having a length, if possible, longer than the side portion of said seat; and
   b) at least one energy-absorbing member arranged in an operation position opposite to the main direction of the side impact energy whereof

   * one end portion is pivotally or freely attached to said shaft or disposed between said shaft and the side portion of said seat; and
   * the other end portion is arranged to said floor or said seat

   performs
   c) work of deformation in response to the impact force **F** imposed on said shaft at time of transmitting the side impact energy into said floor

   so that

   - the impact acceleration **b**-dependent mass inertia force $F_B$ is reduced;
   - the seat flame **(3, 3)** is not or less loaded upon the contact with said member; and
   - the deployment time is prolonged, thus enabling to deploy a safety airbag **(80, 80)** into the space defined by the deformed vehicle door and the upper part of the body inclined by said mass inertia force, if the substitute is equipped with safety airbag.

2. A side airbag-substitute according to claim 1, wherein a substitute, which is rotatable about the y1- and/or y2-axis, comprising

   a) the vehicle seat having at least two pairs of round rails **(1, 2, 81, 82)**;
   b) a rotatable device pivotally attached to the seat, floor or at least one guide rail **(81, 82)**; and
   c) said device is provided with at least one blocking mechanism having a predetermined magnitude;
   performs under load of increasing impact force **F**

d) more work of deformation at time of transmitting the side impact energy into the vehicle floor;

e) work of fracture on exceeding said magnitude in order to disengage said blocking mechanism; and

f) work of arcuately removing the occupant seating on said seat from the injury-prone areas to the vehicle-centre

so that

- said occupant, particularly the head, is protected against the structural intrusion;
- the acceleration **b**-dependent-mass inertia force $F_B$ and the acceleration $\ddot{\text{O}}$-dependent-rotating inertia force $F_D$ are substantially reduced;
- the seat frame (**3, 3**) is not or less loaded upon the contact with said member; and
- the deployment time is substantially prolonged.

3. A substitute according to at least one of preceding claims, wherein both ends of the side impact shaft (**11.2**) are secured by force-locking connection to the receptacles of both rotatable levers (**1.70a, 1.71a**) whose other receptacles

- (**1.71a**) are guided by the retaining plates of seat legs of seat frame **3** and pivotally attached to the pivot bolts (**1.72**) about the y15-axis; *or*
- (**1.70a**) are pivotally attached to a pair of the rotatable levers (**1.71a**) at the mutual pivot bolts (**1.72a**) about the y14-axis whereof the other receptacles rotatably attached to the pivot bolts (**1.72**) about the y15-axis are guided and said levers are sideways guided by

 * the respective retaining plates (**81.5c**) of the floor; *or*
 * the respective retaining plates of seat legs of seat frame (**3**).

4. A substitute according to at least one of preceding claims, wherein both ends of the side impact shaft (**11.2**) are secured by force-locking connection to the rotatable levers (**1.70**) whereof the other ends as receptacles are sideways guided by the guide rail (**81**) along the y1-axis so that the rotatable device is moved in y1 direction upon the contact of at least one lever with a seat leg of seat frame (**3**) during the seat adjustment.

5. A substitute according to at least one of preceding claims, wherein the rotatable device is connected to at least one energy-absorbing member by projecting its side impact shaft (**11.2**) through:

- the receptacle of shock absorber (**11.10**), suspension system or leaf spring (**11c2 to 11c4**); *or*
- the hole of lever (**20**) rigidly mounted to a torsion spring; *or*
- the tube (**5.3**) of lever (**5**) wherewith the open receptacle of the leaf spring (**11c**) is in free contact to permit unconstrained deformation.

6. A substitute according to claim 5, wherein the hole, tube or receptacle is provided with a slide bearing in order to slide along the side impact shaft during seat adjustment in longitudinal direction.

7. A substitute according to at least one of preceding claims, wherein the receptacle along the side impact shaft is positioned by distance washers (**1.31**) and at least one spacer ring (**1.30**).

8. A substitute according to at least one of claims 1 to 2, wherein the back portion of a torsion spring (**11b**) serves as side impact shaft (**11.2**).

9. A substitute according to claim 8, wherein both leg portions (**11.7**) of torsion spring (**11b**) provided with two rubber tubular sleeves (**11.30, 11.35**) are clamped by U-shaped screws (**11.31, 11.36**), protruding through the respective holes of reinforced elements (**10b**) welded to the seat rails (**1a, 2a or 1, 2**), and fastened to nuts (**11.32, 11.37**).

10. A substitute according to at least one of preceding claims, wherein, when the following spring element or compression spring block is under load of increasing force, its working area with progressive characteristic is achieved by increasingly

- rolling one-sided coils or two sided coils of non-cylindrical coil spring (**11**), preferably with variable rod-diameter; on a spring seat (**11.15**) or both spring seats, *or*

- rolling one or several supplementary leaves $Z_1$, $Z_2$,...$Z_n$ in correlation to the corresponding radii of curvature $K_1$, $K_2$,...$K_n$ on the main leaf $Z_0$ of leaf spring **(11c3, 11c)**, preferably with variable thickness of leaf; *or*
- rolling the coils of a cylindrical coil spring on each other; *or*
- compressing a compression spring block provided with at least two chambers R1, R2 and/or at least two materials M1, M2 having different Young's modulus and shear modulus.

11. A substitute according to at least one of preceding claims, wherein the spring element is provided with at least one site of predetermined fracture.

12. A substitute according to at least one of preceding claims, wherein each abutment side of stiff retaining block **(11.50a, 11.50b)** in engagement with the deformed leaf spring is of curved shape in order to avoid the peak edge stress.

13. A substitute according to at least one of preceding claims, wherein, for the purpose of stepping in or out of the rear section of passenger compartment, the section of the floor is countersunk to house the receptacle of leaf spring **(11c1a)** pivotally attached to the vehicle floor by the coupling means comprising a bolt **(11.74)** and nut **(11.75)**.

14. A substitute according to at least one of claims 1 to 11, wherein flat strips are integrated into a compound torsion spring **(11d)** by sufficiently bolting the nuts **(11.56)** to the respective projected thread of screws **(11.54)** protruding through a big washer **(11.55)**, the elongated apertures thereof and a big washer **(11 55)** so that during the deformation of said torsion spring said sufficient bolting permits friction of those flat strips on each other in order to perform works of deflection and friction.

15. A substitute according to at least one of claims 1 to 11, wherein both end portions of torsion spring **(11d1 to 11d4)** are provided with

- square head, hexagon head or arbitrarily-edged head; *or*
- serration; *or*
- square heads for the purpose of integrating the same torsion springs with similar head into a compound torsion spring **(11d4)**.

16. A substitute according to at least one of claims 14 to 15, wherein two L-shaped fixing plates **(11.58)** are rigidly attached to the vehicle floor to facilitate the work of positioning the torsion spring thereto.

17. A substitute according to at least one of preceding claims, wherein at least one reinforced element **(10a)** at slanting angle $\alpha$ is force-locking connected to both inner sides of seat legs of seat frame **(3)** facing each other.

18. A substitute according to claim 17, wherein at least one of the reinforced elements **(10a)** is provided with at least one site of predetermined fracture.

19. A substitute according to at least one of preceding claims, wherein the following substitute consists of

- **(B1)** of two reinforced elements **(10a)** and two compression spring blocks **(11a)** wherefrom each is circumferentially clamped by a steel ring **(11.23)** having a screw **(11.21)** protruding through the seat leg of seat frame **(3)** and bolted to nut **(11.22)**; *or* **(B3)**, serving as suspension system, of a hollow compression block **(11a1)**, coil spring **(11)**, rubber bush **(11.12)** and shock absorber **(11.10)** where its end portion is pivotally attached to the side impact shaft **(11.2)** of rotatable device and its other end portion is bolted to a reinforced mount **(10c)**, rigidly attached to the seat rail **(2 or 2a)**, by nut **(11.8)**; *or*
- **(B5a or B5b)** of a leaf spring **(11c2)**, having a receptacle pivotally attached to the side impact shaft **(11.2)** of rotatable device, and a torsion spring **(11d, 11d1 to 11d)** rigidly attached to

  * the other end portion of said leaf spring by the nuts **(11.62)** bolted to the respective U-shaped screws **(11.52)** arranged on the stiff retaining plate **(11.53)** and through the stiff retaining block **(11.50)**; and
  * the vehicle floor by the screws **(11.57)** projecting through both stiff retaining clamps **(11.51 or 11.51a)** after positioning between both L-shaped fixing plates **(11.58)**; *or*

- **(B5d)** of a leaf spring **(11c)**, having an open receptacle in free contact with the tube of lever **(5)** of rotatable device, and a torsion spring **(11d, 11d1 to 11d4)** rigidly attached to

  * the other end portion of said leaf spring by the nuts (11.62 bolted to the respective U-shaped screws (11.52) arranged on the stiff retaining plate (11.53 and through the stiff retaining block (11.50c); and
  * the vehicle floor by the screws (11.57) projecting through both stiff retaining clamps (11.51 or 11.51a) after positioning between both L-shaped fixing plates (11.58); or

- (B5c) of a stiff lever (20), having a hole, and a torsion spring (11d, 11d1 to 11d3) rigidly attached to

  * the vehicle floor by the screws (11.57) projecting through both stiff retaining clamps (11.51) after positioning between both L-shaped fixing plates (11.58); and
  * to said lever by the screw (20.1) after inserting through said hole; or

- (B6b) of a leaf spring (11c3) having

  * an end portion tightly clamped by bolting the screws (11.59) projecting through the stiff retaining block (11.50a, 11.50b) to the vehicle floor; and
  * another end portion pivotally attached to the side impact shaft (11.2) of rotatable device.

20. A substitute according to at least one of claims 1 to 18, wherein a single leaf spring (11c3) of substitute (B6a), arranged in x-direction and provided for two vehicle seats in juxtaposition, is attached

   - pivotally to both rotatable devices by projecting their side impact shafts (11.2, 11.2) through its both receptacles having slide bearings; and
   - rigidly to the vehicle floor by the screws (11.59) projecting through one stiff retaining block (11.50b) or two stiff retaining blocks (11.50a).

21. A substitute according to at least one of claims 1 to 18, wherein the substitute (B4), for vehicle seat equipped with rails (1, 2, 81, 82), consists of

   - a leaf spring (11c1 or 11c1a) whereof an end portion as receptacle pivotally attached to the retaining plates (11.73) of vehicle floor by the coupling means comprising a bolt (11.74) and nut (11.75) and the other end portion slides on the sliding shoe (11.71) fastened to the clamp (11.70) by the pin (11.76); and
   - a leaf spring (11c4) freely movable below said leaf spring and having a receptacle guided by the guide rail (82) and another end portion pivotally attached to the side impact shaft (11.2) of rotatable device.

22. A substitute according to at least one of claims 1 to 2, wherein the rotatable device of each seat section (C1, C2) rotatable about the y2-axis consists of two blocking mechanisms (S4) wherefrom each comprises

   - a lever (2.2) pivotally attached to the round head rivet (82c) of vehicle floor (6) about the y2-axis;
   - a lever (2.1) as hinge strip with two receptacles for receiving a pivot bolt (3.5) of subframe (3.10) and the other pivot bolt (2.8) of lever (2.2); and
   - a longitudinally adjustable spacer plate (2.12) in association with coupling means as connection piece of both levers (2.1, 2.2) to said subframe,

   where after projecting the shaft (1.11a), preloaded by spring (1.25), of a prefabricated unit through the holes of spacer plate (2.12) and of lever (2.2) and after bolting the case (1.20a) of said unit to the back of lever (2.1) by screws (1.21), those rotatable parts (2.1, 2.2, 2.12) are in state of interlocking by inserting the circular segment of a retaining piece (2.4), preloaded by spring (1.25), into the groove of said shaft, but in response to the impact force imposed on the side impact shaft and the restoring force of torsion spring (2.5), said piece (2.4) rotates about said shaft (1.11a) thus terminating said state of interlocking and releasing said shaft (1.11a) so that said rotatable parts are released.

23. A substitute according to at least one of claims 1 to 18 and 22, wherein the vehicle seat without pair of rails consists of two juxtaposed, foldaway seat sections (C1, C2) having a gap of s therebetween and two pairs of rotatable devices wherefrom each seat section (C1 or C2) comprises a stiff seat flame (3 or 3) and subframe (3.10 or 3.10) having a pair of hinges (40) for the purpose of enlarging the freight space by folding and pivotally attached to both bolts (3.5c) about the y1-axis and to both round head rivets (3.5) of the 1st rotatable device having two blocking mechanisms (S4) about the y21-axis whose pairs of levers (2.1, 2.2) and other parts are in the state of interlocking by engaging the spring-preloaded retaining piece (2.4) in the grooves of spring-preloaded shafts (1.11a), whereas said retaining piece **(2.4)** is connected to a 2nd rotatable device facing the vehicle side or door **(8)** by force of the leaf spring **(11c3)** via a release cable **(12c)**, but the impact force imposed on the side impact shaft of said 2nd rotatable device deforms said leaf spring **(11c3)** resulting in disengaging said retaining piece **(2.4)** from said spring-preloaded shafts **(1.11a)** and releasing said levers **(2.1, 2.2)** and said other parts so that said subflame **(3.10)** rotates about the y1- and y2-axis and its rotation is stronger upon the contact of said deformed leaf spring **(11c3)** with the stiff rod **(14a)** in response to intrusion.

24. A substitute of vehicle seat without pairs of rails according to at least one of claims 1 to 21, wherein a substitute, having a seat frame **(3)** without pairs of rails fastened to the vehicle floor, has the same proposals (features) as the substitute with rails.

25. A substitute according to at least one of preceding claims, wherein the substitutes are in series connected to the front seat and the successive seats by

   - a longitudinal torsion spring **(11d, 11d1 to 11d4)** to which the tandem leaf springs or levers **(20)** are rigidly attached; *or*
   - a longitudinal leaf spring **(11c1, 11c1a)** under which the tandem leaf springs **(11c4)** are arranged, one of which is guided by the guide rail **(82)** of said front seat and the others for said successive seats are bolted to the vehicle floor by screws **(11.59)** projecting through the stiff retaining blocks **(11.50a, 11.50b)**; *or*
   - a longitudinal torsion spring, arranged in the tunnel **(6.1)** of front wheel-driven vehicle, whereto the tandem substitutes of the left and right seat rows are in rigid and offset attachment; *or*
   - a torsion spring arranged in a longitudinal countersink of vehicle floor whereto the tandem substitutes of the left and right seat rows are in rigid and offset attachment; *or*
   - two longitudinal torsion springs arranged adjacent to the tunnel **(6.1)** and in the respective countersinks of vehicle floor whereto the tandem substitutes of the left and right seat rows are rigidly attached.

26. A substitute with safety airbag according to at least one of preceding claims, characterized by evaluation of

   - the deformation of the side impact shaft **(11.2, 11.2)** of rotatable device to determine (sense) the magnitude of side impact energy;
   - the deformation of at least one energy-absorbing member of rotatable device to determine the magnitude of side impact energy; *and/or*
   - the forced vibration of the shock absorber to determine the magnitude of impact velocity **v**.

27. A substitute with safety airbag according to claim 26, wherein the front airbag serves as safety airbag **(80, 80)** in the event of front collision as well as of side collision.

28. A substitute with safety airbag according to claim 27, wherein the safety airbag **(80 or 80)** is provided with at least two self-sustaining cushions **(80A, 80B or 80A, 80B)** whereof the cushion **(80A, 80A)** has at least two gas generators activated in the event of side collision, but only one thereof in the event of front collision.

29. A substitute with safety airbag according to at least one of claims 27 and 28, wherein the cushion **(80A, 80A)** is enlarged by at least one additional cushion **(80C, 80C)** having at least one own gas generator which together with said cushion **(80A, 80A)** is deployed only in the event of side collision.

30. A substitute with safety airbag according to at least one of claims 27 to 29, wherein the gas generator of the cushion **(80B, 80B)** is inactive in the event of side collision.

31. A substitute according to at least one of preceding claims, characterized by use of metal, compound material, glass fibre reinforced material or non-metal material for material of spring elements, compression spring blocks, shock absorbers, reinforced elements, seat parts, side impact shaft and parts of rotatable device.

**Revendications**

1. Système de remplacement d'airbag latéral d'un siège de véhicule comprenant au moins deux paires de rails traditionnels **(1a, 2a, 81a, 82a)** ou de rails circulaires **(1, 2, 81, 82)** dans les plans des axes y1 et y2 et dont :

   - les éléments à ressorts et corps élastiques, amortisseurs de suspension, amortisseurs à friction et/ou :

- les systèmes à ressorts

en tant qu'éléments absorbeurs d'énergie assurent la déformation, augmentent la fiabilité, réduisent les coûts et minimisent le risque de lésions en cas de choc latéral réel ; **caractérisé en ce que** ce système de remplacement **(B1 à B7)** comprend :

a) un dispositif pivotant monté tourillonnant sur le siège ou le plancher du véhicule **(6)**, comprenant des leviers orientables et un arbre d'absorption du choc latéral **(11.2, 11.2)**, disposés entre le siège et la porte du véhicule **(8, 8)** et, dans la mesure du possible, allant au-delà du siège, et

b) au moins un élément absorbeur d'énergie dont la position de service est celle opposée à la direction principale du choc latéral, dont :

* une extrémité est disposée orientable ou flottante sur l'arbre d'absorption du choc latéral ou bien disposée entre ledit arbre et le siège du véhicule ;
* l'autre extrémité est disposée sur le plancher ou le siège du véhicule ;

assurant ainsi :
c) le travail de déformation à la suite de la force de poussée **F** générée sur l'arbre d'absorption du choc latéral, faisant passer la force ou l'énergie du choc latéral dans le plancher du véhicule ; et :

- réduisant ainsi la force proportionnelle à la masse $F_B$ qui est fonction de l'accélération de poussée **b** ;
- réduisant ainsi à zéro, ou considérablement, la sollicitation du siège générée lors du contact entre l'élément absorbeur d'énergie et le cadre du siège **(3, 3)**, et :
- prolongeant ainsi le temps d'activation, ce qui permet d'introduire un airbag de sécurité gonflé **(80, 80)** entre la porte déformée et la partie supérieure du tronc inclinée sous l'effet de la force proportionnelle à la masse, pourvu que le système soit muni d'un tel airbag de sécurité.

**2.** Système de remplacement selon la revendication 1, caractérisé en ce que :

a) le siège du véhicule avec au moins deux paires de rails circulaires **(1, 2, 81, 82)** et :
b) un dispositif pivotant monté tourillonnant sur le siège, le plancher ou au moins une glissière **(81, 82)**,
c) équipé d'au moins d'un mécanisme de blocage avec valeur seuil incorporée forment un système de remplacement pivotant autour de l'axe y1- et/ou y2, qui, lors de l'augmentation de la force **F** proportionnelle à la poussée, assure :
d) une plus grande déformation lors de la passation de la force dans le plancher du véhicule ;
e) la rupture après dépassement de la valeur seuil pour débloquer le mécanisme de blocage ; et :
f) sert à déplacer l'occupant du siège hors des zones de danger et vers le milieu du véhicule ;

et ce pour :

- protéger l'occupant, et plus particulièrement sa tête, contre l'intrusion des parties déformées du véhicule ;
- réduire davantage la force $F_B$ proportionnelle à la masse et la force $F_D$ inertielle de rotation ;
- réduire ainsi à zéro, ou considérablement, la sollicitation du siège du véhicule au contact d'au moins un élément absorbeur d'énergie avec le cadre du siège **(3, 3)** ;
- prolonger le temps d'activation.

**3.** Système de remplacement selon au moins une des revendications citées ci-devant, caractérisé en ce que les extrémités de l'arbre d'absorption du choc latéral **(11.2)** sont montées de façon tourillonnante sur une paire de leviers orientables **(1.70a, 1.71a)** et en ce que les autres extrémités :

- **(1.71a)** sont logées latéralement, guidées par les plaques de maintien des pieds de siège du cadre **(3)** et de façon orientable autour de l'axe y15 sur les boulons de support **(1.72)**; *ou* :
- **(1.70a)** sont logées avec une paire de leviers orientables **(1.71a)** de telle sorte qu'elles peuvent pivoter autour de l'axe y14 sur les boulons de support communs **(1.72a)**, les autres extrémités desdits leviers **(1.71a)** étant logées de façon orientable autour de l'axe y15 aux boulons de support **(1.72)** ; les leviers sont logés comme suit :

* soit guidés latéralement par les plaques de maintien **(81.5c)** du plancher du véhicule **(6)**; *ou* :

\*    guidés latéralement par les plaques de maintien des pieds du siège du cadre **(3)**.

4.  Système de remplacement selon au moins une des revendications ci-devant, caractérisé en ce que les extrémités de l'arbre d'absorption du choc latéral **(11.2)** sont montées de façon pivotante sur une paire de leviers orientables **(1.70)** et en ce que les autres extrémités sont guidées latéralement par le rail circulaire de guidage **(81)** le long de l'axe y1, de sorte que, lors du contact entre au moins un levier et un pied du cadre du siège **(3)** pendant le déplacement du siège, le dispositif pivotant se déplace en direction y1.

5.  Système de remplacement selon au moins une des revendications ci-devant, caractérisé en ce que le dispositif pivotant est relié à au moins une pièce absorbant de l'énergie, et ce en introduisant l'arbre d'absorption du choc latéral **(11.2)** :

    -   *soit* dans l'oeil de l'amortisseur **(11.10)**, du système à ressorts ou d'un ressort à lames **(11c2 à 11c4)** ;
    -   *soit* dans la perforation du levier **(20)** sur lequel est fixé un ressort à torsion ;
    -   *soit* dans le tuyau **(5.3)** du levier **(5)** sur lequel l'oeil ouvert du ressort à torsion **(11c)** est disposé librement, assurant ainsi une déformation libre.

6.  Système de remplacement selon la revendication 5, caractérisé en ce que la perforation, le tuyau ou l'oeil sont équipés d'une douille de glissement permettant un glissement le long de l'arbre d'absorption du choc latéral pendant le déplacement du siège en sens longitudinal.

7.  Système de remplacement selon au moins une des revendications ci-devant, caractérisé en ce que l'oeil peut être positionné le long de l'arbre d'absorption du choc latéral à l'aide de rondelles d'écartement **(1.31)** et d'au moins un anneau d'écartement **(1.30)**.

8.  Système de remplacement selon au moins une des revendications 1 à 2, caractérisé en ce que l'arbre d'absorption du choc latéral **(11.2)** peut être remplacé par la partie arrière **(11b)** d'une barre antiroulis.

9.  Système de remplacement selon la revendication 8, caractérisé en ce que les deux jambes **(11.7)** de la barre antiroulis sont équipées de deux coussinets chacune **(11.30, 11.35)** sur lesquels sont disposées des vis en U **(11.31, 11.36)** qui sont introduites dans les trous de fixation des éléments de renforcement **(10b)** soudés sur les deux rails du siège **(1a, 2a** ou **1, 2)** et serrées à l'aide d'écrous **(11.32, 11.37)**.

10. Système de remplacement selon au moins une des revendications ci-devant, caractérisé en ce que la surface de travail de l'élément à ressorts connaît un développement progressif en fonction de l'augmentation de la charge, et ce pour les raisons suivantes :

    -   intensification du roulement d'un ressort non cylindrique de compression **(11)** sur un ou deux cotés, de préférence à diamètre de barre variable, roulement effectué sur un support de ressort **(11.15)** ou sur les deux supports ; *ou* :
    -   intensification du roulement d'un ou de plusieurs ressorts à lames supplémentaires $Z_1$, $Z_2$,... $Z_n$ en fonction de la courbure correspondante $K_1$, $K_2$,... $K_n$ sur le ressort principal $Z_0$ du ressort à lames **(11c3, 11c)**, de préférence avec épaisseur de lame variable ; *ou* :
    -   intensification du roulement des hélices d'un ressort cylindrique de compression les unes sur les autres, *ou* :
    -   intensification de la compression d'un corps élastique muni de deux chambres R1, R2 et/ou au moins deux matériaux M1, M2 à modules d'élasticité et de glissement différents.

11. Système de remplacement selon au moins une des revendications ci-devant, caractérisé en ce que l'élément à ressorts est muni d'au moins un points destiné à la rupture dont la rigidité a été réduite intentionnellement.

12. Système de remplacement selon au moins une des revendications ci-devant, caractérisé en ce que chaque côté de la pièce de rétention **(11.50a, 11.50b)** située sur le ressort à lames ayant été en contact avec le ressort à lames déformé a une forme courbée.

13. Système de remplacement selon au moins une des revendications ci-devant, caractérisé en ce que l'oeil du ressort à lames **(11c1a)** est encastré dans une cavité du plancher du véhicule et logé orientable sur un élément d'union composé d'une vis **(11.74)** et d'un écrou **(11.75)**.

14. Système de remplacement selon au moins une des revendications 1 à 11, caractérisé en ce que le ressort à torsion (11d) est composé d'aciers plats à trous oblongs sur les deux extrémités dans lesquels sont logées des vis (11.54) munies de grandes rondelles (11.55) et serrées convenablement à l'aide d'écrous (11.56) de sorte que pendant la déformation du ressort à torsion compact cet assemblage par vis convenablement serré permet la friction des aciers plats entre eux, assurant de cette manière le travail du ressort et de friction.

15. Système de remplacement selon au moins une des revendications 1 à 11, caractérisé en ce que les deux extrémité du ressort à torsion sont munies des éléments suivants :

    - têtes à quatre ou six pans ou tout autre nombre de pans du ressort à torsion (11d1, 11d3); ou :
    - têtes du ressort à torsion (11d2) munies de denture à cannelure, ou :
    - têtes à quatre pans permettant de regrouper les ressorts à têtes identiques pour former un seul ressort à torsion (11d4).

16. Système de remplacement selon au moins une des revendications 14 et 15, caractérisé en ce que deux plaques de positionnement en profilé L (11.58) permettant de positionner le ressort à torsion sont montées fixe sur le plancher du véhicule.

17. Système de remplacement selon au moins une des revendications ci-devant, caractérisé en ce qu'au moins un élément de renforcement (10a) muni d'un angle d'inclinaison $\alpha$ est relié adhérent aux deux côtés intérieurs des pieds opposés du cadre du siège (3).

18. Système de remplacement selon la revendication 17, caractérisé en ce qu'au moins un des éléments de renforcement (10a) est muni d'un point destiné à la rupture dont la rigidité sera réduite intentionnellement, et ce pour renforcer le cadre du siège et pour libérer l'énergie accumulé.

19. Système de remplacement selon au moins une des revendications ci-devant, caractérisé en ce que ledit système de remplacement est formé comme suit :

    - (B1) : comprenant deux éléments de renforcement (10a) et deux corps élastiques (11a), dont chacun est muni d'une bague d'acier (11.23) et d'une vis (11.21) ; ils seront fixés sur le pied du cadre du siège (3) en y introduisant ladite vis et en la serrant à l'aide d'un écrou (11.22) ; ou :
    - (B3) : comprenant un corps creux (11a1), un ressort cylindrique à compression (11), une douille en caoutchouc (11.12) et un amortisseur (11.10) ; il s'agit d'un système élastique dont une extrémité est reliée orientable à l'arbre d'adsorption du choc latéral (11.2) du dispositif pivotant et dont l'autre extrémité est reliée adhérent à travers un écrou (11.8) avec un support de renforcement (10c) monté fixe sur le rail du siège (2 ou 2a) ; ou :
    - (B5a ou B5b) comprenant un ressort a lames (11c2), dont l'oeil est monté orientable sur l'arbre d'absorption du choc latéral (11.2) du dispositif pivotant, et un ressort à torsion (11d, 11d1 à 11d4) monté adhérent comme suit :

      * avec l'autre extrémité dudit ressort à lames à travers les vis en U (11.52) et écrous (11.62) disposés à l'aide d'un étrier de retenue (11.50) sur la plaque de fixation (11.53); ainsi que :
      * avec le plancher du véhicule à l'aide des vis (11.57) montées dans les deux étriers de retenue (11.51) ou boîtiers de fixation (11.51a), et après avoir effectué un positionnement à l'aide des deux plaques en profilés L (11.58); ou :

    - (B5d) comprenant un ressort à lames (11c) dont l'oeil ouvert est disposé librement sur le tuyau du levier (5) du dispositif pivotant, ainsi qu'un ressort à torsion (11d, 11d1 à 11d4), celui-ci étant relié adhérent comme suit :

      * avec l'autre extrémité dudit ressort à lames à travers les vis en U (11.52) et écrous (11.62) disposés à l'aide d'un étrier de retenue (11.50c) sur la plaque de fixation (11.53); ainsi que :
      * avec le plancher du véhicule à l'aide des vis (11.57) montées dans les deux étriers de retenue (11.51) ou boîtiers de fixation (11.51a), et après avoir effectué un positionnement à l'aide des deux plaques en profilés L (11.58); ou :

    - (B5c) : comprenant un levier rigide (20) avec un trou et un ressort à torsion (11d, 11d1 à 11d3), celui-ci étant fixé comme suit :

* sur le plancher du véhicule à l'aide des vis **(11.57)** montées dans les deux étriers de retenue **(11.51)** après avoir effectué le positionnement entre les deux plaques de positionnement en profilés L, et :

* en introduisant la vis **(20.1)** dans le trou du levier **(20)**, cette union étant adhérente ; *ou :*

- **(B6b)** : comprenant un ressort à lames **(11c3)** situé en dessous d'une pièce de retenue **(11.50a, 11.50b)** :

* une extrémité du ressort étant montée adhérent sur le plancher du véhicule en introduisant des vis **(11.59)** dans ladite pièce de retenue : et :
* l'autre extrémité étant montée orientable sur l'arbre d'absorption du choc latéral **(11.2)** du dispositif pivotant.

20. Système de remplacement selon au moins une des revendications 1 à 18, caractérisé en ce que pour deux sièges juxtaposés du véhicule un seul ressort à lames **(11c3)** est disposé le long de l'axe x du système de remplacement **(B6a)** ; celui-ci étant monté :

- orientable sur les deux dispositifs de pivotement, l'union étant assurée en glissant les arbres d'absorption du choc latéral **(11.2, 11.2)** dans les deux douilles de glissement des yeux ; et ;
- adhérent su le plancher du véhicule en introduisant les vis **(11.59)** dans les trous d'une pièce de retenue rigide **(11.50b)** ou de deux pièces de retenue rigides **(11.50a)**.

21. Système de remplacement selon au moins une des revendications 1 à 18, caractérisé en ce que le système de remplacement **(B4)** pour sièges de véhicules est équipé de paires de rails **(1, 2, 81, 82)** et comprend les éléments suivants :

- un ressort à lames **(11c1 ou 11c1a)** dont l'oeil à une extrémité est monté orientable à travers un assemblage par vis, celle-ci **(11.74)** étant introduite dans les plaques de fixation **(11.73)** disposées sur le plancher du véhicule et serrée à l'aide d'un écrou **(11.75)**, l'autre glissant pendant la déformation avec un patin de guidage **(11.71)** qui est fixé sur le plancher du véhicule à travers un étrier de retenue **(11.70)** et une goupille de fixation **(11.76)** ; et :
- un ressort à lames amovible situé en dessous dudit ressort à lames **(11c4)** dont le premier oeil est guidé par le rail de guidage **(82)** et dont l'autre oeil est monté orientable sur l'arbre d'absorption du choc latéral **(11.2)** du dispositif pivotant.

22. Système de remplacement selon au moins une des revendications 1 à 2, caractérisé en ce que le dispositif pivotant monté orientable autour de l'axe y2 de la partie **(C1, C2)** du siège est composé de deux mécanismes de blocage **(S4)** dont chacun comprend les éléments suivants :

- un levier pivotant **(2.2)** monté orientable autour de l'axe y2 sur un boulon pivotant **(82c)** du plancher du véhicule **(6)**,
- un levier pivotant **(2.1)** en tant que charnière, comprenant deux yeux enroulés pour loger un boulon pivotant **(3.5)** du cadre inférieur **(3.10)** et un autre boulon pivotant **(2.8)** du levier pivotant **(2.2)**, et :
- une plaque d'écartement réglable longitudinalement **(2.12)** qui sert à relier les deux leviers pivotants **(2.1, 2.2)** au cadre inférieur à l'aide d'éléments d'assemblage ;

après avoir glissé un arbre **(1.11a)** prétendu par un ressort **(1.25)** d'un module dans les perforations de la plaque d'écartement **(2.12)** et du levier pivotant **(2.2)** et après avoir fixé le boîtier **(1.20a)** du module sur la face arrière du levier pivotant **(2.1)** à l'aide de vis **(1.21)**, ces éléments pivotants **(2.2, 2.1, 2.12)** sont verrouillés entre eux ; ce verrouillage est maintenu en introduisant le segment de cercle de la plaque de fixation **(2.4)** logée orientable sur la goupille et prétendue par le ressort de la jambe **(2.5)** dans la rainure de l'arbre prétendu par le ressort **(1.11a)** ; mais à la suite de la force du choc appliquée sur l'arbre d'absorption du choc latéral et de la force de rappel du ressort de la jambe **(2.5)**, la plaque de fixation **(2.4)** sur la goupille tournera, débloquant ainsi le verrouillage et libérant l'arbre **(1.11a)**, ce qui annulera également le verrouillage des éléments pivotants.

23. Système de remplacement selon au moins une des revendications 1 à 18 et 22, caractérisé en ce que le siège du véhicule, sans paire de rails, est composé de deux parties rabattables juxtaposées **(C1, C2)**, séparées entre elles par l'interstice s et équipées chacune de deux dispositifs pivotants ; chaque partie **(C1 ou C2)** comprend un cadre de siège rigide **(3 ou 3)** et un cadre inférieur **(3.10 ou 3.10)**, celui-ci étant équipé d'une paire de charnières **(40)** permettant de rabattre le siège pour agrandir la surface de chargement et étant logé pivotant aux deux boulons pivotants **(3.5c)** autour de l'axe y1 et aux deux boulons pivotants **(3.5)** du premier dispositif pivotant comprenant deux mécanismes de blocage **(S4)** autour de l'axe y21, dont les leviers pivotants **(2.1, 2.2)** et autres composants sont verrouillés entre eux par paires à la suite de l'engrènement des plaques de fixation prétendues par ressort **(2.4)** dans les rainures des arbres prétendus par ressort **(1.11a)** ; ces plaques de fixation **(2.4)** sont reliées à un deuxième dispositif pivotant, orienté vers le côté ou la porte **(8)** du véhicule, à travers les câbles d'activation **(12c)** ; ce dispositif pivotant étant maintenu par la force d'un ressort à lames **(11c3)**, mais à la suite de la passation de la force du choc dans l'arbre d'absorption du choc latéral **(11.2)** du deuxième dispositif pivotant, le ressort à lames **(11c3)** sera déformé ; ceci sert à enlever le blocage des plaques de fixation **(2.4)** reliées au deuxième dispositif pivotant à travers les câbles d'activation face aux arbres prétendus par ressort **(1.11a)** ; suite à cela, les leviers pivotants **(2.1, 2.2)** et autres composants seront débloqués ; par conséquent, le cadre inférieur **(3.10)** pivotera autour des axes y1 et y2, ce pivotement étant renforcé par le contact du ressort à lames déformé **(11c3)** avec le tuyau d'activation rigide **(14a)** du cadre inférieur en cas d'intrusion.

24. Système de remplacement selon au moins une des revendications 1 à 21, caractérisé en ce que, en renonçant aux paires de rails, le système de remplacement d'un siège du véhicule dont le cad**re (3, 3)** est fixé au plancher, présente les mêmes caractéristiques.

25. Système de remplacement selon au moins une des revendications ci-devant, caractérisé en ce que les systèmes de remplacement du siège avant et des sièges suivants sont disposés l'un après l'autre, et ce en utilisant les éléments suivants :

- un ressort à torsion disposé longitudinalement **(11d, 11d1 à 11d4)** sur lequel sont fixés les ressorts à lames montés l'un après l'autre ou les leviers **(20)** ; *ou :*
- un ressort à lames disposé longitudinalement **(11c1, 11c1a)** en dessous duquel sont montés les ressorts à lames disposés l'un après l'autre **(11c4)** dont un est guidé par le rail de guidage **(82)** du siège avant du véhicule le long de l'axe y2 et dont les autres sont vissés au véhicule à l'aide des vis **(11.59)** en faisant usage des pièces de retenue **(11.50a, 11.50b)** destinées aux sièges suivants ; *ou :*
- un ressort à torsion disposé longitudinalement dans le tunnel **(6.1)** d'une traction avant, sur lequel les systèmes de remplacement des rangées de sièges à gauche et à droite disposés l'un après l'autre sont fixés échelonné ; *ou*
- un ressort à torsion encastré dans une cavité longitudinale dans le plancher du véhicule, sur lequel les systèmes de remplacement des rangées de sièges à gauche et à droite disposés l'un après l'autre sont fixés échelonné ; *ou :*
- deux ressorts à torsion encastrés le long du tunnel **(6.1)** dans le plancher du véhicule qui sont montés adhérent aux systèmes de remplacement des rangées de sièges a gauche et à droite disposés l'un après l'autre.

26. Système de remplacement avec airbag de sécurité selon au moins une des revendications ci-devant, caractérisé en ce que les évaluations suivantes sont réalisées :

- évaluation de la déformation de l'arbre d'absorption du choc latéral **(11.2, 11.2)** du dispositif pivotant pour déterminer la magnitude de l'énergie du choc latéral ;
- évaluation de la déformation d'au moins un élément absorbeur d'énergie du dispositif pivotant pour déterminer la magnitude de l'énergie du choc latéral, *et/ou*
- évaluation de la vibration forcée de l'amortisseur pour déterminer la magnitude de la vitesse **v** du choc latéral.

27. Système de remplacement avec airbag de sécurité selon la revendication 26, caractérisé en ce que l'airbag frontal **(80, 80)** assure la fonction d'airbag de sécurité pour protéger les occupants non seulement en cas de choc frontal, mais aussi en cas de choc latéral.

28. Système de remplacement avec airbag de sécurité selon la revendication 27, caractérisé en ce que l'airbag de sécurité **(80 ou 80)** est muni d'au moins deux poches indépendantes l'une de l'autre **(80A, 80B ou 80A, 80B)**, dont la poche **(80A, 80A)** est équipée d'au moins deux générateurs de gaz activés en cas de choc latéral ; mais un des générateurs étant activé en cas de choc frontal.

29. Système de remplacement avec airbag de sécurité selon au moins une des revendications 27 et 28, caractérisé en ce que la poche **(80A, 80A)** peut être complétée par une autre **(80C, 80C)**, munie d'au moins un propre générateur de gaz qui sera activé, ainsi que la poche correspondante **(80A, 80A)**, exclusivement en cas de choc latéral.

**30.** Système de remplacement avec airbag de sécurité selon au moins une des revendications 27 à 29, caractérisé en ce que le générateur de gaz de la poche **(80B, <u>80B</u>)** ne sera pas activé en cas de choc latéral.

**31.** Système de remplacement selon au moins une des revendications ci-devant, caractérisé par l'usage de métaux, matériaux composites, matériaux renforcés par fibres optiques ou matériaux non-métalliques pour fabriquer les éléments à ressort, les éléments et corps élastiques, amortisseurs, éléments de renforcements, composants du siège, leviers, l'arbre d'absorption du choc latéral et composants du dispositif pivotant

Fig. 1a

Fig. 1

Fig. 2

Fig. 5

Fig. 6

Fig. 3

Fig. 4

Fig. 7

Fig. 8

Fig. 9

Fig. 10

Fig. 11

Fig. 12

Fig. 13

Fig. 14

Fig. 15

Fig. 16

Fig. 17

Fig. 18

Fig. 19

11.50a
11c3

Fc

Fc

z
y
x

F

3
1
3
2

11.2
y13
1.70a
y14
y1
81
82
1.25
y2

10b

10b

11.59 11.50b

1.72
1.71a
1
y15
y14

11c3
11.2
1.25
y13
y1
81
1.72a
12a
1.2
1.11
1.70a

11.50a

EP 0 844 939 B1

Fig. 21

Fig. 20

Fig. 22

Fig. 23

Fig. 25

Fig. 24

$$A_F = \int k_{F2} \cdot x_F \cdot \delta x_F$$

Fig. 26

Fig. 27

41